# EUROPEAN PATENT APPLICATION

(11) **EP 4 239 461 A1**
(43) Date of publication of application: **06.09.2023**
(21) Application number: 21900831.5
(22) Date of filing: 01.11.2021
(51) Int. Cl.: G06F 3/0484, G06F 1/16, G06F 3/0486, G06F 3/0488, H04N 5/232

(54) **ELECTRONIC DEVICE, AND METHOD OF EXPANDING DISPLAY OF ELECTRONIC DEVICE**

(30) Priority: 04.12.2020 KR 20200168952; 21.01.2021 KR 20210008844
(71) Applicant: Samsung Electronics Co., Ltd., Suwon-si, Gyeonggi-do 16677 (KR)
(72) Inventor: KIM, Junghyung, Suwon-si, Gyeonggi-do 16677 (KR); SON, Dongil, Suwon-si, Gyeonggi-do 16677 (KR); KIM, Hankon, Suwon-si, Gyeonggi-do 16677 (KR)
(74) Representative: Gulde & Partner
(86) International application number: PCT/KR2021/015615
(87) International publication number: WO 2022/119143

(57) **Abstract**

An electronic device according to various embodiments comprises: a flexible display; a camera; a motor module which expands and contracts the display on the basis of received information; a touch sensor which receives a touch input; and a processor operatively coupled to the display, the motor module, the camera, and the touch sensor. The processor may be configured to: execute the camera; display, on a display screen, image data received by the camera; determine a zoom magnification by receiving information about a touch input sensed by the touch sensor; generate expansion information, including the length to which the display is to be expanded, on the basis of the zoom magnification; transmit the generated expansion information to the motor module; expand or contract the image data according to the zoom magnification; and when the display screen is expanded, additionally display the expanded image data in an expanded area.

## Description

### [Technical Field]

The disclosure relates to an electronic device, and for example, to an electronic device in which a flexible display is expanded based on a user's touch input, and a method for expanding a flexible display of an electronic device.

### [Background Art]

With the development of digital technology, an electronic device is provided in various forms, such as a smartphone, a tablet personal computer (tablet PC), and a personal digital assistant (PDA). An electronic device is being designed to provide a larger screen with a portable size that does not cause discomfort in the user's hand.

### [Disclosure of Invention]

### [Technical Problem]

A device in the related art enlarges or reduces an image by performing a pinch zoom or touching a camera zoom icon, and such an operation is performed separately from an expansion of a display. Accordingly, a device having a flexible (e.g., rollable) display in which a screen is expanded may fail to take advantage of the flexible display when expanding the image.

### [Solution to Problem]

An electronic device according to various embodiments may include: a flexible display; a camera; a motor module configured to expand and contract the display based on received information; a contact sensor configured to receive a touch input; and a processor operatively connected to the display, the motor module, the camera, and the contact sensor, wherein the processor is configured to: execute the camera, display, on a screen of the display, image data received by the camera, determine a zoom magnification by receiving information about the touch input sensed by the contact sensor, generate expansion information including a length with which the display is to be expanded based on the zoom magnification, transmit the generated expansion information to the motor module, expand or contract the image data in accordance with the zoom magnification, and additionally display the expanded image data in an expanded area in case that the display screen is expanded.

A method for expanding a flexible display of an electronic device according to various embodiments may include: executing a camera; displaying, on a screen of the display, image data received by the camera; determining a zoom magnification by receiving information about a touch input sensed by a contact sensor; transmitting the zoom magnification to a motor module; expanding or contracting the image data in accordance with the zoom magnification; and additionally displaying the expanded image data in an expanded area in case that the display screen is expanded.

### [Advantageous Effects of Invention]

According to various embodiments, the electronic device including the flexible (e.g., rollable) display can provide an optimized environment in which a user can view images having various magnifications on a wider screen by enlarging the image based on the user's touch input and expanding the display at the same time. Through this, it will be possible to use the electronic device including the flexible display more efficiently.

In addition, effects that can be obtained or predicted through various embodiments of the disclosure are directly or implicitly disclosed in the detailed description of the embodiments of the disclosure. For example, various effects being predicted according to various embodiments of the disclosure will be disclosed within the detailed description to be described later.

### [Brief Description of Drawings]

FIG. 1 is a block diagram of an electronic device in a network environment according to various embodiments.
FIG. 2A is a front perspective view of an electronic device in a closed state according to an embodiment.
FIG. 2B is a rear perspective view of an electronic device in a closed state according to an embodiment.
FIG. 3A is a front perspective view of an electronic device in an open state according to an embodiment.
FIG. 3B is a rear perspective view of an electronic device in an open state according to an embodiment.
FIG. 4 is an exploded perspective view of an electronic device of FIG. 2A according to an embodiment.
FIG. 5 is a cross-sectional view of a part of an electronic device taken along line A-A' in the electronic device in the closed state of FIG. 2A according to an embodiment.
FIG. 6 is a cross-sectional view of a part of an electronic device taken along line B-B' in the electronic device in the open state of FIG. 3A according to an embodiment.
FIG. 7 is a block diagram of the electronic device of FIG. 2A according to an embodiment.
FIGS. 8A and 8B illustrate an electronic device on which a display is expanded by a touch input according to various embodiments.
FIG. 9 illustrates an electronic device on which a display is expanded in case of using a multi-camera according to an embodiment.
FIGS. 10A and 10B illustrate an electronic device that expands an image when a display is expanded according to an embodiment.
FIG. 11 illustrates an electronic device on which a display is expanded vertically according to an embodiment.
FIGS. 12A and 12B illustrate a method for expanding a rollable display of an electronic device.

### [Mode for the Invention]

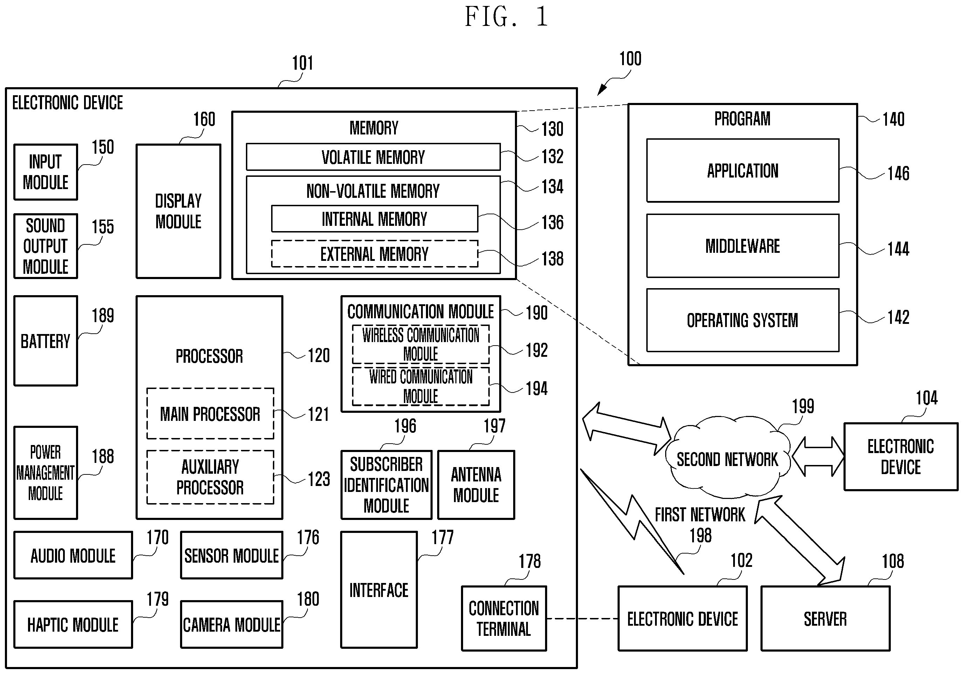

Fig. 1 is a block diagram illustrating an electronic device 101 in a network environment 100 according to various embodiments.

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

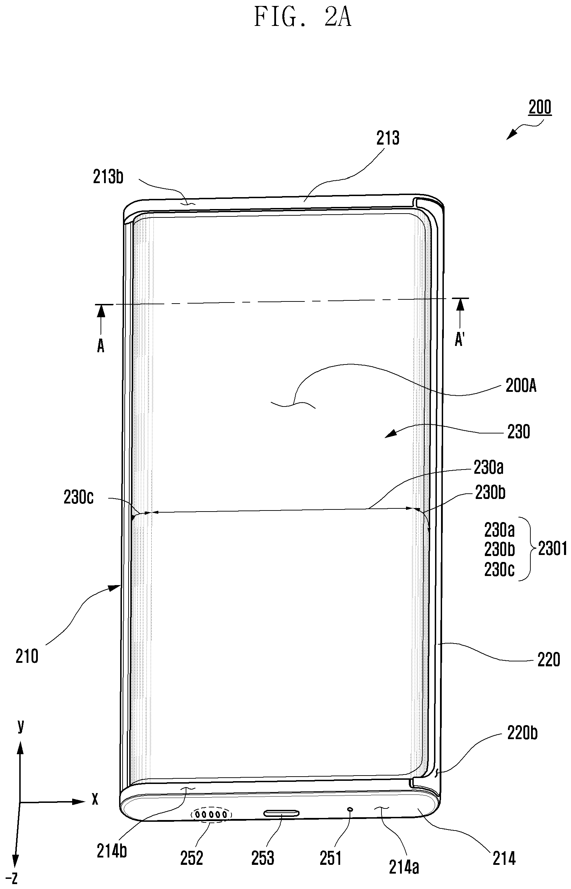

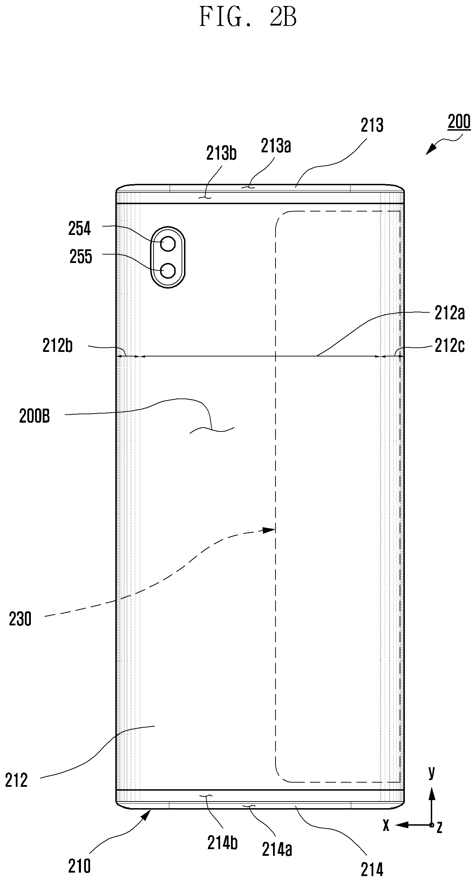

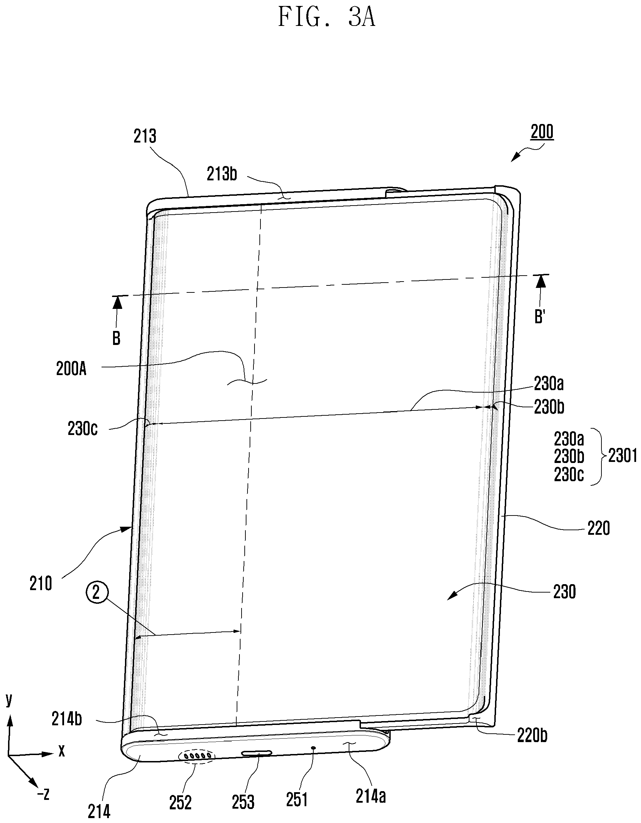

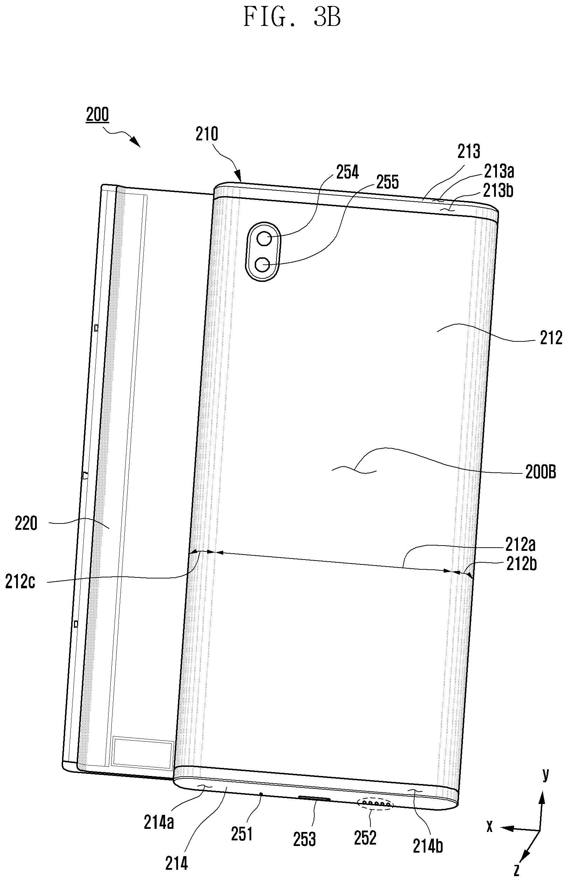

FIG. 2A is a front perspective view of an electronic device 200 in a closed state according to an embodiment. FIG. 2B is a rear perspective view of an electronic device 200 in a closed state according to an embodiment. FIG. 3A is a front perspective view of an electronic device 200 in an open state according to an embodiment. FIG. 3B is a rear perspective view of an electronic device 200 in an open state according to an embodiment.

According to various embodiments, an electronic device 200 of FIG. 2A may include the electronic device 101 of FIG. 1.

With reference to FIGS. 2A, 2B, 3A, and 3B, in an embodiment, the electronic device 200 may be implemented to expand a screen 2301 in a sliding manner. For example, the screen 2301 may be an area of a flexible display 230 that is viewed to an outside. FIGS. 2A and 2B illustrate the electronic device 200 in a state where the screen 2301 is not expanded, and FIGS. 3A and 3B illustrate the electronic device 200 in a state where the screen 2301 is expanded. The state where the screen 2301 is not expanded is a state where a sliding plate 220 for sliding motion of the display 230 is not in a slide-out state, and may hereinafter be referred to as a "closed state". The state where the screen 2301 is expanded is a state where the screen 2301 is maximally expanded and is not expanded any more by the slide-out of the sliding plate 220, and may hereinafter be referred to as an "open state". For example, the slide-out may be movement of at least a part of the sliding plate 220 in the first direction (e.g., +x-axis direction) when the electronic device 200 is switched from the closed state to the open state. According to various embodiments, as compared with the closed state, the open state may be defined as a state where the screen 2301 is expanded, and provide the screen with various sizes in accordance with the movement location of the sliding plate 220. According to various embodiments, an intermediate state may indicate a state between the closed state of FIG. 2A and the open state of FIG. 3A. The screen 2301 may include an active area of the flexible display 230 visually exposed and capable of outputting an image, and the electronic device 200 may adjust the active area in accordance with the movement of the sliding plate 220 or the movement of the flexible display 230. In the following description, the open state may indicate a state where the screen 2301 is maximally expanded. In a certain embodiment, the flexible display 230 which is slidably disposed on the electronic device 200 of FIG. 2A and provides the screen 2301 may also be referred to as a "slide-out display" or an "expandable display".

According to an embodiment, the electronic device 200 may include a sliding structure related to the flexible display 230. For example, if the flexible display 230 moves a predetermined distance by an external force, due to an elastic structure included in the sliding structure, the electronic device 200 may be switched from the closed state to the open state, or from the open state to the closed state without any further external forces (e.g., semi-auto slide operation).

According to a certain embodiment, if a signal is generated through an input device included in the electronic device 200, the electronic device 200 may be switched from the closed state to the open state, or from the open state to the closed state by a driving device, such as a motor connected to the flexible display 230. For example, if a signal is generated through a hardware button or a software button that is provided through the screen, the electronic device 200 may be switched from the closed state to the open state, or from the open state to the closed state.

According to various embodiments, if a signal is generated from various sensors, such as pressure sensors, the electronic device 200 may be switched from the closed state to the open state, or from the open state to the closed state. For example, when the electronic device 200 is carried or grasped by the hand, a squeeze gesture that a part of the hand (e.g., palm or finger) presses a designated section of the electronic device 200) may be sensed by the sensor, and corresponding to this, the electronic device 200 may be switched from the closed state to the open state, or from the open state to the closed state.

According to an embodiment, the display 230 may include a second section ② (refer to FIG. 3A). The second section ② may include an expanded part of the screen 2301 when the electronic device 200 is switched from the closed state to the open state. When the electronic device 200 is switched from the closed state to the open state, the second section ② may be slidably drawn out from an inner space of the electronic device 200, and thus the screen 2301 may be expanded. When the electronic device 200 is switched from the open state to the closed state, at least a part of the second section ② may be slidably drawn into the inner space of the electronic device 200, and thus the screen 2301 may be contracted. When the electronic device 200 is switched from the open state to the closed state, at least a part of the second section ② may be bent and moved into the inner space of the electronic device 200. For example, the flexible display 230 may include a flexible substrate (e.g., plastic substrate) formed of a polymer material including polyimide (PI) or polyester (PET). The second section ② is a part being bent of the flexible display 230 when the electronic device 200 is switched between the open state and the closed state, and may be referred to as, for example, a bendable section. In the following description, the second section ② will be referred to as the bendable section.

According to an embodiment, the electronic device 200 may include a housing 210, a sliding plate 220, or a flexible display 230.

The housing (or case) 210 may include, for example, a back cover 212, a first side cover 213, or a second side cover 214. The back cover 212, the first side cover 213, or the second side cover 214 may be connected to a support member (not illustrated) located inside the electronic device 200, and may form an exterior of the electronic device 200 at least partly.

The back cover 212 may form, for example, at least a part of the back surface 200B of the electronic device 200. In an embodiment, the back cover 212 may be substantially opaque. For example, the back cover 212 may be formed of coated or colored glass, ceramic, polymer, metal (e.g., aluminum, stainless steel (STS), or magnesium), or a combination of at least two of the above materials. According to a certain embodiment, in a state where the bendable section ② of the flexible display 230 is drawn into the inner space of the housing 210 (e.g., closed state), at least a part of the bendable section ② may be disposed to be seen from the outside through the back cover 212. In this case, the back cover 212 may be formed of a transparent material and/or a semi-transparent material.

According to an embodiment, the back cover 212 may include a plane part 212a and curved parts 212b and 212c located on opposite sides to each other, with the plane part 212a interposed therebetween. The curved parts 212b and 212c may be formed adjacent to both relatively long edges (not illustrated) of the back cover 212, respectively, and may be seamlessly extended to be bent toward the screen that is located on an opposite side to the back cover 212. According to a certain embodiment, the back cover 212 may include one of the curved parts 212b and 212c, or may be implemented without the curved parts 212b and 212c.

According to an embodiment, the first side cover 213 and the second side cover 214 may be located opposite to each other. For example, the first side cover 213 and the second side cover 214 may be located opposite to each other, being interposed by the flexible display 230 in the second direction (e.g., y-axis direction) that is orthogonal to the first direction (e.g., +x-axis direction) of the slide-out of the sliding plate 220. The first side cover 213 may form at least a part of a first side surface 213a of the electronic device 200, and the second side cover 214 may form at least a part of a second side surface 214a of the electronic device 200 directed in an opposite direction to the direction of the first side surface 213a. The first side cover 213 may include a first border part (or first rim) 213b extended from an edge of the first side surface 213a. For example, the first border part 213b may form at least a part of a one side bezel of the electronic device 200. The second side cover 214 may include a second border part (or second rim) 214b extended from an edge of the second side surface 214a. For example, the second border part 214b may form at least a part of the other side bezel of the electronic device 200. According to an embodiment, in the closed state of FIG. 2A, the surface of the first border part 213b, the surface of the second border part 214b, and the surface of the sliding plate 220 may be smoothly connected to form a one side curved part (not illustrated) corresponding to the side of the first curved part 230b of the screen 2301. According to various embodiments, the surface of the first border part 213b or the surface of the second border part 214b may include the other side curved part (not illustrated) corresponding to the side of the second curved part 230c of the screen 2301 located on an opposite side to the first curved part 230b.

According to an embodiment, the sliding plate 220 may slide on a support member (not illustrated) located inside the electronic device 200. At least a part of the flexible display 230 may be disposed on the sliding plate 220, and the closed state of FIG. 2A or the open state of FIG. 3A may be formed based on the location of the sliding plate 220 on the support member. According to an embodiment, the flexible display 230 may be attached to the sliding plate 120 through an adhesive member (or stick member) (not illustrated). According to an embodiment, the adhesive member may include a heat reaction adhesive member, a photoreaction adhesive member, a general adhesive, and/or a double-sided tape. According to a certain embodiment, the flexible display 230 may be disposed and fixed onto the sliding plate 220 by being inserted into a recess formed on the sliding plate 220 in a sliding manner. The sliding plate 220 may play a role of supporting at least a part of the flexible display 230, and in a certain embodiment, it may be referred to as a display support structure.

According to an embodiment, the sliding plate 220 may include a third border part 220b that forms an outer surface of the electronic device 200 (e.g., a surface being exposed to an outside to form the exterior of the electronic device 200. For example, the third border part 220b may form a bezel around the screen together with the first border part 213b and the second border part 214b in the closed state of FIG. 2A. The third border part 220b, in the closed state, may be extended in the second direction (e.g., y-axis direction) so as to connect one end part of the first side cover 213 and one end part of the second side cover 214 with each other. For example, in the closed state of FIG. 2A, the surface of the third border part 220b may be smoothly connected to the surface of the first boarder part 213b and/or the surface of the second border part 214b.

According to an embodiment, due to the slide-out of the sliding plate 220, at least a part of the bendable section ② may come out from the inside of the electronic device 200 to provide the expanded state (e.g., open state) of the screen 2301 as in FIG. 3A.

According to an embodiment, in the closed state of FIG. 2A, the screen 2301 may include a plane part 230a and a first curved part 230b and/or a second curved part 230c located on opposite sides to each other, being interposed by the plane part 230a. For example, the first curved part 230b and the second curved part 230c may be substantially symmetrical to each other, being interposed by the plane part 230a. For example, in the closed state of FIG. 2A, the first curved part 230b and/or the second curved part 230c may be located to correspond to the curved parts 212b and 212c of the back cover 212, respectively, and may have a bent shape toward the back cover 212. In case of the switchover from the closed state of FIG. 2A to the open state of FIG. 3A, the plane part 230a may be expanded. For example, a partial area of the bendable section ② that forms the second curved part 230c in the closed state of FIG. 2A may be included in the plane part 230a expanded when being switched from the closed state of FIG. 2A to the open state of FIG. 3A, and may be formed as another area of the bendable section (2).

According to an embodiment, the electronic device 200 may include an opening (not illustrated) for draw-in or draw-out of the bendable section ② and/or a pulley (not illustrated) located in the opening. The pulley may be located corresponding to the bendable section ②, and during the switchover between the closed state of FIG. 2A and the open state of FIG. 3A, the movement of the bendable section ② and the movement direction thereof may be guided through rotation of the pulley. The first curved part 230b may be formed corresponding to a curved surface formed on one surface of the sliding plate 220. The second curved part 230c may be formed by a portion corresponding to the curved surface of the pulley of the bendable section (2). The first curved part 230b may be located on an opposite side to the second curved part 230c in the closed state or open state of the electronic device 200, and thus aesthetic of the screen 2301 can be improved. According to a certain embodiment, the plane part 230a may be implemented in an expanded form without the first curved part 230b.

According to an embodiment, the flexible display 230 may further include a touch sensing circuit (e.g., touch sensor). According to various embodiments (not illustrated), the flexible display 230 may be combined with or disposed adjacent to a pressure sensor capable of measuring the strength (pressure) of a touch and/or a digitizer detecting a magnetic field type pen input device (e.g., stylus pen). For example, the digitizer may include a coil member disposed on a dielectric substrate so as to detect an electromagnetic induction type resonance frequency applied from the pen input device.

According to an embodiment, the electronic device 200 may include a microphone hole 251 (e.g., input module 150 of FIG. 1), a speaker hole 252 (e.g., sound output module 155 of FIG. 1), a connector hole 253 (e.g., connection terminal 178 of FIG. 1), a camera module 254 (e.g., camera module 180 of FIG. 1), or a flash 255. According to various embodiments, the flash 255 may be implemented to be included in the camera module 254. In a certain embodiment, the electronic device 200 may omit at least one of constituent elements, or may additionally include other constituent elements.

The microphone hole 251 may be formed, for example, on at least a part of the second side surface 214a corresponding to a microphone (not illustrated) located inside the electronic device 200. The location of the microphone hole 251 may not be limited to that in the embodiment of FIG. 2A, but may be diverse. According to a certain embodiment, the electronic device 200 may include a plurality of microphones that can sense the direction of sound.

The speaker hole 252 may be formed, for example, on at least a part of the second side surface 214a corresponding to the speaker located inside the electronic device 200. The location of the speaker hole 252 may not be limited to that in the embodiment of FIG. 2, but may be diverse. According to various embodiments, the electronic device 200 may include a receiver hole for calling. In a certain embodiment, the microphone hole 251 and the speaker hole 252 may be implemented as one hole, or the speaker hole 252 may be omitted like a piezo-electric speaker.

The connector hole 253 may be formed, for example, on at least a part of the second side surface 214a corresponding to a connector (e.g., USB connector) located inside the electronic device 200. The electronic device 200 may transmit and/or receive a power and/or data to/from an external electronic device electrically connected to the connector through the connector hole 253. The location of the connector hole 253 may not be limited to that in the embodiment of FIG. 2A, but may be diverse.

The camera module 254 and the flash 255 may be located, for example, on the rear surface 200B of the electronic device 200. The camera module 154 may include one or a plurality of lenses, image sensors, and/or an image signal processor. The flash 255 may include, for example, a light emitting diode or a xenon lamp. In a certain embodiment, two or more lenses (infrared camera, and wide angle and telephoto lenses) and image sensors may be located on one surface of the electronic device 200. According to various embodiments, the electronic device 200 is not limited to that in the embodiment of FIG. 2B or 3B, but the electronic device 200 may include a plurality of camera modules. The camera module 254 may be one of the plurality of camera modules. For example, the electronic device 200 may include the plurality of camera modules (e.g., dual camera or triple camera) having different attributes (e.g., viewing angles) or functions. For example, a plurality of camera modules (e.g., camera modules 254) including lenses having different viewing angles may be constituted, and the electronic device 200 may control to change the viewing angles of the camera modules being performed in the electronic device 200 based on a user's selection. Further, the plurality of camera modules may include at least one of a wide angle camera, a telephoto camera, a color camera, a monochrome camera, or an infrared (IR) camera (e.g., time of flight (TOF) camera or structured light camera). According to an embodiment, the IR camera may operate as at least a part of a sensor module (not illustrated).

According to various embodiments (not illustrated), the electronic device 200 may further include a camera module (e.g., front camera) that generates an image signal based on light received through one surface (e.g., front surface 200A) of the electronic device 200 put in a direction that the screen 2301 faces. For example, the camera module 254 may not be limited to that in the embodiment of FIG. 2B or 3B, but may be located inside the housing 210 while being aligned with an opening (e.g., through-hole or notch) formed on the flexible display 230. The camera module 254 may generate the image signal by receiving light through the opening and a partial area of a transparent cover overlapping the opening. The transparent cover may play a role of protecting the flexible display 230 from the outside, and may include, for example, a material, such as polyimide or ultrathin glass (UTG).

According to a certain embodiment, the camera module 254 may not be limited to that in the embodiment of FIG. 2B or 3B, but may be disposed at a bottom of at least a part of the screen 2301 of the flexible display 230, and perform a related function (e.g., image capturing) in a state where the location of the camera module 254 is not visually discriminated (or exposed). In this case, for example, when viewed from the top of the screen 2301 (e.g., when viewed in -z-axis direction), the camera module 254 may be disposed overlapping at least a part of the screen 2301, and obtain an image of an external subject without being exposed to the outside.

According to various embodiments (not illustrated), the electronic device 200 may further include a key input device (e.g., input module 150 of FIG. 1). The key input device may be located, for example, on the first side surface 213a of the electronic device 200 formed by the first side cover 213. In a certain embodiment (not illustrated), the key input device may include at least one sensor module.

According to various embodiments (not illustrated), the electronic device 200 may include various sensor modules (e.g., sensor module 176 of FIG. 1). The sensor module may generate an electrical signal or a data value corresponding to an internal operation state of the electronic device 200 or an external environment state. For example (not illustrated), the sensor module may include a proximity sensor that generates a signal related to proximity of an external object based on the light received through the front surface 200A of the electronic device 200 put in the direction that the screen 2301 faces. As another example (not illustrated), the sensor module may include various biosensors, such as a fingerprint sensor or an HRM sensor for detecting information on a living body based on the light received through the front surface 200A or the rear surface 200B of the electronic device 200. The electronic device 200 may include at least one of various other sensor modules, for example, a gesture sensor, gyro sensor, barometric pressure sensor, magnetic sensor, acceleration sensor, grip sensor, color sensor, infrared (IR) sensor, biosensor, temperature sensor, humidity sensor, or illumination sensor.

According to various embodiments, the electronic device 200 may not be limited to that in the embodiments of FIGS. 2A, 2B, 3A, and 3B, but may be implemented as a structure in which the screen is expanded from the side of the third border part 220b during the slide-out of the sliding plate 220. For example, a partial area of the flexible display 230 forming the first curved part 230b in the closed state of FIG. 2A may be included in the plane part 230a that is expanded when being switched from the closed state of FIG. 2A to the open state of FIG. 3A, and may be formed as another area of the flexible display 230.

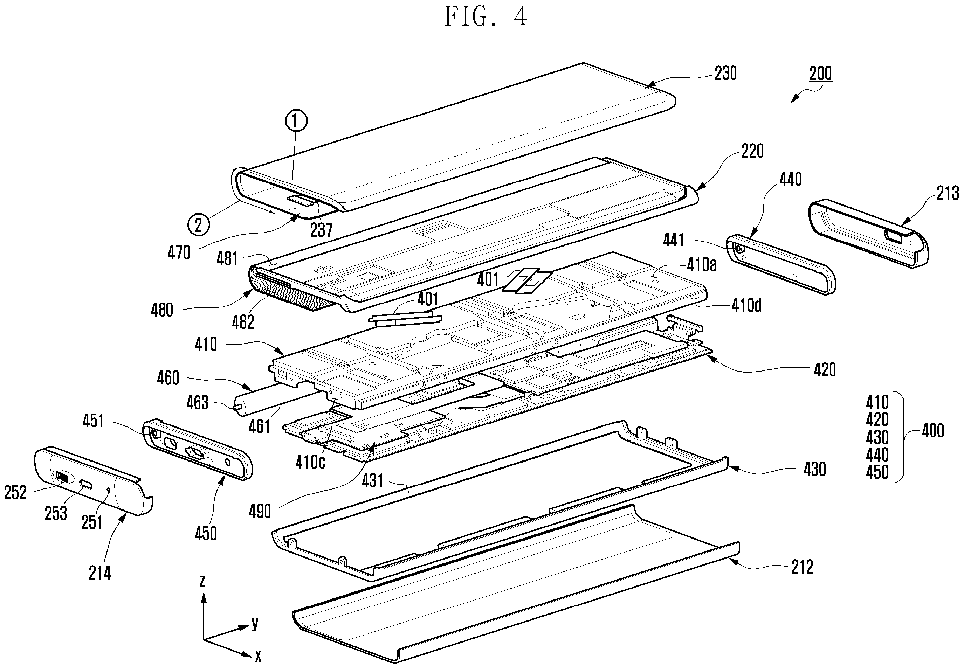

FIG. 4 is an exploded perspective view of an electronic device 200 of FIG. 2A according to an embodiment.

With reference to FIG. 4, in an embodiment, the electronic device 200 may include a back cover 212, a first side cover 213, a second side cover 214, a support member assembly 400, a pulley 460, a sliding plate 220, a flexible display 230, a support sheet 470, a multi-bar structure (or multi-bar assembly) 480, or a printed circuit board 490 (e.g., a printed circuit board (PCB), a flexible PCB (FPCB), or rigid-flexible PCB (RFPCB)). Duplicate explanation of some of drawing reference numerals of FIG. 4 will be omitted.

According to an embodiment, the support member assembly (or support structure) 400 is a frame structure which can bear the load, and may contribute to durability or stiffness of the electronic device 200. At least a part of the support member assembly 400 may include a nonmetal material (e.g., polymer) or a metal material. The housing 210 (refer to FIG. 2A) including the back cover 212, the first side cover 213, or the second side cover 214, the pulley 460, the sliding plate 220, the flexible display 230, the support sheet 470, the multi-bar structure 480, or the printed circuit board 490 may be disposed on or combined with the support member assembly 400.

According to an embodiment, the support member assembly 400 may include a first support member 410, a second support member 420, a third support member 430, a fourth support member 440, or a fifth support member 450.

The first support member (or first bracket) 410 may be, for example, in the form of a plate. The sliding plate 220 may be disposed on one surface 410a of the first support member 410. The second support member (or second bracket) 420 may be, for example, in the form of a plate that overlaps at least a part of the first support member 410 when viewed in the z-axis direction, or may be combined with the first support member 410 and/or the third support member 430. The second support member 420 may be located between the first support member 410 and the third support member 430. The third support member 430 may be combined with the first support member 410 and/or the second support member 420, being interposed by the second support member 420. The printed circuit board 490 may be disposed on the second support member 420 between the first support member 410 and the second support member 420. The fourth support member 440 may be combined with one side of an assembly (or structure) (not illustrated) in which the first support member 410, the second support member 420, and the third support member 430 are combined with one another. The fifth support member 450 may be combined with the other side of the assembly (or structure) (not illustrated) in which the first support member 410, the second support member 420, and the third support member 430 are combined with one another, and may be located on an opposite side to the fourth support member 440. The first side cover 213 may be combined with the support member assembly 400 on the side of the fourth support member 440. The second side cover 214 may be combined with the support member assembly 400 on the side of the fifth support member 450. The back cover 212 may be combined with the support member assembly 400 on the side of the third support member 430. At least some of the first support member 410, the second support member 420, the third support member 430, the fourth support member 440, or the fifth support member 450 may include a metal material and/or a nonmetal material (e.g., polymer). According to various embodiments, at least two of the first support member 410, the second support member 420, the third support member 430, the fourth support member 440, and the fifth support member 450 may be integrally implemented. According to a certain embodiment, the support member assembly 400 may refer to a structure that forms at least some of the first support member 410, the second support member 420, the third support member 430, the fourth support member 440, and the fifth support member 450. According to a certain embodiment, some of the first support member 410, the second support member 420, the third support member 430, the fourth support member 440, and the fifth support member 450 may be omitted.

The first support member 410 may include, for example, a first side surface (not illustrated) facing the fourth support member 440, a second side surface 410c facing the fifth support member 450 and located on an opposite side to the first side surface, a third side surface (not illustrated) connecting one end part of the first side surface and one end part of the second side surface 410c with each other, or a fourth side surface 410d connecting the other end part of the first side surface and the other end part of the second side surface 410c with each other and located on an opposite side to the third side surface. According to an embodiment, the pulley 460 may be located near the third side surface of the first support member 410. As another example, in case of an electronic device in which the slide-out direction is oppositely formed, the pulley 460 may be located near the fourth side surface 410d of the first support member 460. The pulley 460 may include a roller 461 in the form of a cylinder extended in a direction (e.g., +y-axis direction) toward the fourth support member 440 from the fifth support member 450. The pulley 460 may include a first rotation shaft (not illustrated) and a second rotation shaft 463 connected to the roller 461, and the first rotation shaft and the second rotation shaft 463 may be located on opposite sides to each other, being interposed by the roller 461. The first rotation shaft may be located between the roller 461 and the first side cover 213, and may be connected to the fourth support member 440. The second rotation shaft 463 may be located between the roller 461 and the second side cover 214, and may be connected to the fifth support member 450. The fourth support member 440 may include a first through-hole 441 into which the first rotation shaft is inserted, and the fifth support member 450 may include a second through-hole 451 into which the second rotation shaft 463 is inserted. The roller 461 may be able to be rotated based on the first rotation shaft disposed on the fourth support member 440 and the second rotation shaft 463 disposed on the fifth support member 450.

According to an embodiment, the sliding plate 220 may be slidably disposed on the support member assembly 400 on the first support member 410. For example, between the first support member 410 and the sliding plate 220, a sliding structure for supporting and guiding the combination between them and the movement of the sliding plate 220 may be prepared. According to an embodiment, the sliding structure may include at least one elastic structure 401. If the sliding plate 220 moves a predetermined distance by an external force, it may be switched from the closed state of FIG. 2A to the open state of FIG. 3A, or from the open state to the closed state by the at least one elastic structure 401 even without any further external force. The at least one elastic structure 401 may include various elastic members, for example, such as a torsion spring. For example, as the elastic structure 401, the torsion spring may include one end part connected to the sliding plate 220, the other end part connected to the first support member 410, and a spring part between the one end part and the other end part. If the sliding plate 220 moves the predetermined distance in the first direction (e.g., +x-axis direction) of the slide-out by the external force, the location of the one end part against the other end part is changed, and thus the sliding plate 220 may move in the first direction due to the elasticity of the spring part even without any further external force, so that the sliding plate 220 may be switched from the closed state of FIG. 2A to the open state of FIG. 3A. If the sliding plate 220 moves the predetermined distance in the second direction (e.g., -x-axis direction) that is opposite to the first direction by the external force, the location of the one end part against the other end part is changed, and thus the sliding plate 220 may move in the second direction due to the elasticity of the spring part even without any further external force, so that the sliding plate 220 may be switched from the open state of FIG. 3A to the closed state of FIG. 2A.

According to various embodiments, the housing 210 may be defined to further include at least a part of the support member assembly 400. For example, the housing 210 may include one surface (e.g., one surface 410a formed by the first support member 410) that is directed in the first direction (e.g., +z-axis direction) and the other surface (e.g., rear surface 200B of FIG. 2B) that is directed in the second direction (e.g., -z-axis direction), which is opposite to the first surface 410a. The display support structure 220 may be slidably disposed on the one surface (e.g., one surface 410a formed by the first support member 410) of the housing 210 in the third direction (e.g., x-axis direction) that is vertical to the first direction. According to an embodiment, the flexible display 230 may include the first section ① extended from the bendable section ②. The first section ① may be disposed on the sliding plate 220. In case of the switchover from the closed state of FIG. 2A to the open state of FIG. 3A, due to the movement of the sliding plate 220, the bendable section ② connected to the first section ① may slide out to cause the screen (refer to screen 2301 of FIG. 3A) to be expanded. In case of the switchover from the open state of FIG. 2A to the closed state of FIG. 3A, due to the movement of the sliding plate 220, the bendable section ② may enter the electronic device 200 at least partly to cause the screen (refer to screen 2301 of FIG. 2A) to be contracted. The support member assembly 400 may include an opening (not illustrated) for the draw-in or draw-out of the bendable section ②, and the pulley 460 may be located in the opening. The opening may include a one side gap between the first support member 410 and the third support member 430, and one part 431 of the third support member 430 adjacent to the opening may be in a curved shape corresponding to a curved surface of the roller 461. The pulley 460 may be located corresponding to the bendable section ②, and through the movement of the bendable section ② during the switchover between the closed state of FIG. 2A and the open state of FIG. 3A, the pulley 460 may be rotated.

According to an embodiment, the support sheet 470 may be attached to the rear surface of the flexible display 230. The rear surface of the flexible display 230 may indicate a surface located on an opposite side to the surface on which a plurality of pixels are included to emit light from the display panel. The support sheet 470 may contribute to durability of the flexible display 230. The support sheet 470 may reduce an influence which a load or stress that may be generated during the switchover between the closed state of FIG. 2A and the open state of FIG. 3A exerts on the flexible display 230. The support sheet 470 may reduce damage to the flexible display 230 caused by the force being transferred from the sliding plate 220 when the sliding plate 220 moves. Although not illustrated, the flexible display 230 may include a first layer including the plurality of pixels and a second layer combined with the first layer. The first layer may include a light emitting layer (e.g., display panel) including the plurality of pixels implemented by, for example, light emitting elements, such as an organic light emitting diode (OLED) or a micro light emitting diode (LED), and other various layers (e.g., optical layers, such as a polarizing layer and the like, for improving picture quality improvement or outdoor visibility of the screen). According to an embodiment, the optical layer may selectively transmit light which is generate from a light source on the light emitting layer, and vibrates in a constant direction. According to an embodiment, when viewed from the top of the screen 2301 (e.g., when viewed in the -z-axis direction), the plurality of pixels may not be disposed on a partial area of the flexible display 230 that at least partly overlaps at least one electronic component (e.g., camera module or sensor module) included in the electronic device 200. According to a certain embodiment, when viewed from the top of the screen 2301, the partial area of the flexible display 230 that at least partly overlaps the at least one electronic component (e.g., camera module or sensor module) included in the electronic device 200 may include different pixel structure and/or wiring structure as compared with other areas thereof. For example, the partial area of the flexible display 230 that at least partly overlaps the at least one electronic component (e.g., camera module or sensor module) may have a different pixel density as compared with other areas. For example, the partial area of the flexible display 230 that at least partly overlaps the at least one electronic component (e.g., camera module or sensor module) may be implemented as a substantially transparent area formed by the change of the pixel structure and/or wiring structure even if the partial area does not include the opening. The second layer may include various layers for a role of supporting and protecting the first layer (e.g., buffering member (cushion)), a role of shielding light, a role of absorbing or shielding electromagnetic waves, or a role of diffusing, dispersing, or dissipating heat. According to an embodiment, at least a part of the second layer is of a conductive member (e.g., metal plate), and may be used to help stiffness reinforcement of the electronic device 200, shield surrounding noises, and disperse the heat being dissipated from surrounding heat dissipation components (e.g., display driving circuit). According to an embodiment, the conductive member may include at least one of copper (Cu), aluminum (Al), stainless steel (SUS), or CLAD (e.g., laminated member on which SUS and Al are alternately disposed).

The support sheet 470 may be attached to the rear surface of the second layer to at least partly cover the second layer of the flexible display 230. The support sheet 470 may be formed of various metal materials and/or nonmetal materials (e.g., polymer). According to an embodiment, the support sheet 470 may include stainless steel. According to a certain embodiment, the support sheet 470 may include engineering plastic. According to a certain embodiment, the support sheet 470 may be integrally implemented with the flexible display 230. According to a certain embodiment, the support sheet 470 may include a lattice structure (not illustrated) at least partly overlapping the parts (e.g., bendable section ② of FIG. 3A or 4 and the first curved part 230b of FIG. 2A or 3A) on which the flexible display 230 is disposed to be bent. The lattice structure may include a plurality of openings or a plurality of slits, and may contribute to the flexibility of the flexible display 230. According to various embodiments, the support sheet 470 may include a recess pattern (not illustrated) including a plurality of recesses in replacement of the lattice structure, and the recess pattern may contribute to the flexibility of the flexible display 230. According to various embodiments, the lattice structure or the recess pattern may be expanded to at least a part of the plane part 230a of FIG. 2A or 3A. According to various embodiments, the support sheet 470 including the lattice structure or the recess pattern or the corresponding conductive member may be formed as a plurality of layers.

According to an embodiment, the multi-bar structure 480 may be connected to the sliding plate 220, and may include a first surface 481 facing the support sheet 470 and a second surface 482 located on an opposite side to the first surface 481. During the movement of the sliding plate 220, the movement and the direction of the multi-bar structure 480 may be guided by the roller 461 that is rotated by friction with the second surface 482. According to an embodiment, the second surface 482 may include a shape in which a plurality of extended bars (not illustrated) are arranged in the direction (e.g., +y-axis direction) directed from the second rotation shaft 463 to the first rotation shaft (not illustrated) of the pulley 460. The multi-bar structure 480 may be bent at the parts having a relatively thin thickness among the plurality of bars. In various embodiments, the multi-bar structure 480 may be referred to as another term, such as "flexible track" or "hinge rail " .

According to an embodiment, in the closed state of FIG. 2A or the open state of FIG. 3A, at least a part of the multi-bar structure 480 may be located to overlap the screen 2301 (refer to FIG. 2A or 3A), and may support the bendable section ② so that the bendable section ② of the flexible display 230 is maintained to be smoothly connected to the first section ① of the flexible display 230 without excitement. The multi-bar structure 480 may contribute to the movable bendable section ② that maintains smooth connection with the first section ① without excitement during the switchover between the closed state of FIG. 2A and the open state of FIG. 3A.

According to an embodiment, the support sheet 470 can make elements (e.g., multi-bar structure 380) located inside the electronic device 200 be substantially invisible through the flexible display 230.

In the expanded screen state (e.g., open state of FIG. 3A), the screen that is not smooth may be provided due to the excitement caused by the elasticity of the flexible display 230 and/or the support sheet 470. According to various embodiments, in order to reduce this, a tensile structure (not illustrated) for the flexible display 230 and/or the support sheet 470 may be provided. The tensile structure may contribute to the smooth slide operation while maintaining the tensile.

According to an embodiment, the processor (e.g., processor 120 of FIG. 1), the memory (e.g., memory 130 of FIG. 1), and/or the interface (e.g., interface 177 of FIG. 1) may be mounted on the printed circuit board 490. The processor may include, for example, one or more of a central processing unit, an application processor, a graphic processing device, an image signal processor, a sensor hub processor, or a communication processor.

The memory may include, for example, a volatile memory or a nonvolatile memory. The interface may include, for example, a high definition multimedia interface (HDMI), a universal serial bus (USB) interface, an SD card interface, and/or an audio interface. The interface may electrically or physically connect the electronic device 200 to an external electronic device, and may include a USB connector, an SD card / MMC connector, or an audio connector.

The electronic device 200 may include other various elements disposed on the printed circuit board 490 or electrically connected to the printed circuit board 490. For example, the electronic device 200 may include a battery (not illustrated) located between the first support member 410 and the second support member 420 or between the second support member 420 and the back cover 212. The battery (not illustrated) is a device for supplying the power to at least one constituent element of the electronic device 200, and may include, for example, a non-rechargeable primary cell, a rechargeable secondary cell, or a fuel cell. The battery (not illustrated) may be integrally disposed inside the electronic device 200, or may be detachably disposed from the electronic device 200. According to an embodiment, the electronic device 200 may include an antenna (not illustrated) located between the first support member 410 and the second support member 420, or located between the second support member 420 and the back cover 212. The antenna (not illustrated) may include, for example, a near field communication (NFC) antenna, a wireless charging antenna, and/or a magnetic secure transmission (MST) antenna. The antenna (not illustrated) may perform, for example, short range communication with an external device, or wirelessly transmit and receive the power required for charging. In another embodiment, the antenna structure may be formed by a part of the first side cover 213 and/or the second side cover 214, or a combination thereof.

According to an embodiment, the electronic device 200 may include a flexible printed circuit board (FPCB) 237 that electrically connects the flexible display 230 and the printed circuit board 490 to each other. For example, the flexible printed circuit board 237 may be electrically connected to the printed circuit board 490 through an opening (not illustrated) formed on the sliding plate 220 and an opening (not illustrated) formed on the first support member 410.

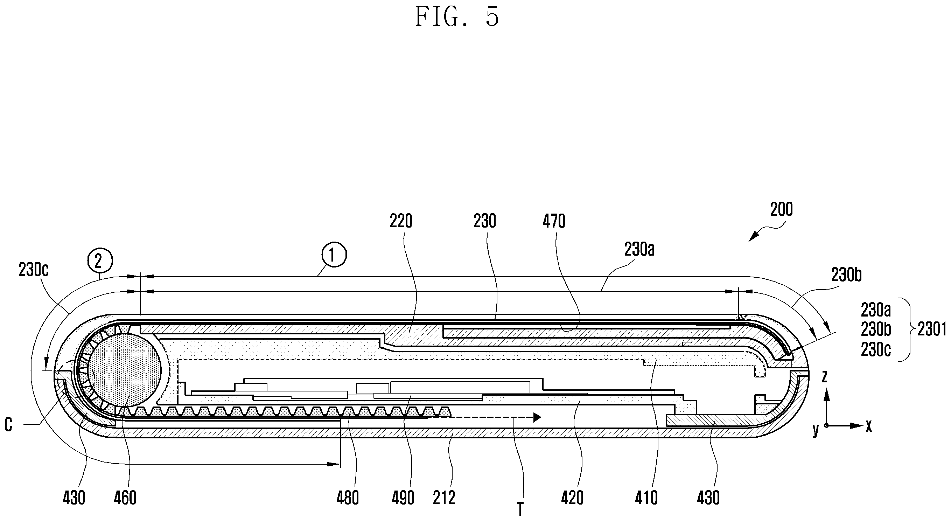

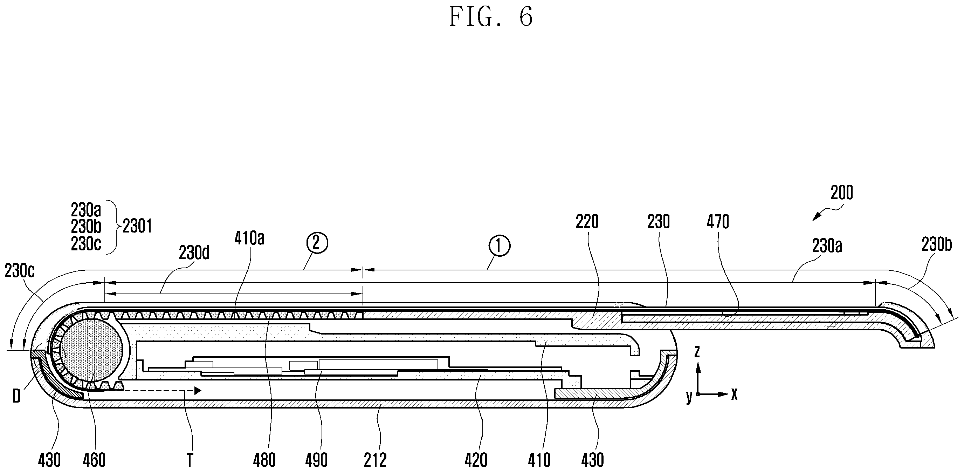

FIG. 5 is a cross-sectional view of a part of an electronic device 200 along line A-A' in the electronic device 200 in the closed state of FIG. 2A according to an embodiment. FIG. 6 is a cross-sectional view of a part of an electronic device 200 along line B-B' in the electronic device 200 in the open state of FIG. 3A according to an embodiment.

With reference to FIGS. 5 and 6, the electronic device 200 may include a back cover 212, a first support member 410, a second support member 420, a third support member 430, a sliding plate 220, a flexible display 230, a support sheet 470, a multi-bar structure 480, a printed circuit board 490, or a pulley 460. The duplicate explanation of some of drawing reference numerals in FIG. 5 or 6 will be omitted.

According to an embodiment, the sliding plate 220 may be disposed on the first support member 410 to be able to slide out. The flexible display 230 may include a first section ① and a bendable section ②. In the closed state of FIG. 5 or in the open state of FIG. 6, the screen 2301 may include a plane part 230a and a first curved part 230b and a second curved part 230c located on opposite sides to each other, with the plane part 230a interposed therebetween. The first section ① may be disposed along the plane part 230a and the first curved part 230b of the screen 2301. The bendable section ② may be extended from the first section ②, and may be drawn out of an inner space of the electronic device 200 during the sliding out of the sliding plate 220. The first curved part 230b may be formed corresponding to a curved surface (not illustrated) formed on one surface of the sliding plate 220. The second curved part 230c may be formed by a part corresponding to a curved surface (not illustrated) of the pulley 460 in the bendable section ②.

According to an embodiment, the support sheet 470 may be disposed on the rear surface of the flexible display 230. According to a certain embodiment, the support sheet 470 may be included in the flexible display 230. The pulley 460 may be located inside the electronic device 200, and may be connected to the bendable section ② of the flexible display 230. The multi-bar structure 480 may be extended from the sliding plate 220 between the support sheet 470 and the pulley 460. The multi-bar structure 480 may contribute to the movable bendable section ② that maintains smooth connection with the first section (f) without excitement during the switchover between the closed state of FIG. 5 and the open state of FIG. 6. In the closed state of FIG. 5 or in the open state of FIG. 6, a part of the bendable section ② may form the second curved part 230c of the screen 2301, and may be supported by the multi-bar structure 480 between the pulley 460 and the bendable section ② to be smoothly connected to the first section ① without excitement. In the open state of FIG. 6, a part 230d of the bendable section ② may form a part of the plane part 230a of the screen 2301, and may be supported by the multi-bar structure 480 between one surface 410a of the first support member 410 and the bendable section ② to be smoothly connected to the first section ① without excitement.

According to various embodiments (not illustrated), in replacement of the pulley 460, a curved member including a curved part that the multi-bar structure 480 comes in contact with may be disposed. For example, during the switchover between the closed state of FIG. 5 and the open state of FIG. 6, the multi-bar structure 480 may slidably move against the curved part. According to various embodiments, in order to reduce a frictional force between the curved part and the multi-bar structure 480, the surface of the curved part or the surface of the multi-bar structure 480 may be surface-treated. According to various embodiments, the curved member may be connected to the support structure 400 of FIG. 4. According to a certain embodiment, the pulley 460 may be defined as a curved member rotatably implemented based on the friction with the multi-bar structure 480. According to a certain embodiment (not illustrated), a rail part (not illustrated) for guiding the movement of the multi-bar structure 480 may be implemented in replacement of the curved member, or may be formed along the curved part of the curved member. The rail part may be formed, for example, on the housing 210 of FIG. 2A or on the support member assembly 400 of FIG. 4. According to an embodiment, the fourth support member 440 may include a first rail part into which one side part of the multi-bar structure 480 is inserted to guide the movement of the multi-bar structure 480. The fifth support member 450 may include a second rail part into which the other side part of the multi-bar structure 480 is inserted to guide the movement of the multi-bar structure 480.

According to various embodiments, the electronic device 200 may not be limited to the embodiment of FIG. 4, 5, or 6, but may be implemented in a manner that in the slide-out of the sliding plate 220, the part (e.g., bendable section ②) of the flexible display 230, which has been rolled up on a roller located inside the electronic device, comes outside and is unrolled to expand the screen.

According to an embodiment, the bendable section ② of the flexible display 230, the bendable section (not illustrated) of the support sheet 470 corresponding to the bendable section ②, and the multi-bar structure 480 may be connected to the pulley 460. The movement and the movement direction of the bendable section ② of the flexible display 230, the bendable section of the support sheet 470, and the multi-bar structure 480 may be guided by the pulley 460. The multi-bar structure 480 may face and come in contact with the roller 461 (refer to FIG. 4) of the pulley 460. The bendable section of the support sheet 470 may be located between the multi-bar structure 480 and the bendable section ② of the flexible display 230. Since the bendable section of the support sheet 470 does not directly face and come in contact with the pulley 460, but moves based on the rotation of the pulley 460 through the driving relationship with the pulley 460 corresponding to the multi-bar structure 480, the bendable section of the support sheet 470 may be described to be in a connection state (or driving connection state) with the pulley 460. Since the bendable section ② of the flexible display 230 does not directly face and come in contact with the pulley 460, but moves based on the rotation of the pulley 460 through the driving relationship with the pulley 460 corresponding to the multi-bar structure 480 and the bendable section of the support sheet 470, the bendable section ② of the flexible display 230 may be described to be in a connection state (or driving connection state) with the pulley 460.

According to an embodiment, the electronic device 200 may include a tensile structure (or tensile device) (not illustrated) for the flexible display 230 and/or the support sheet 470. The tensile structure may be connected to, for example, the support sheet 470, and may provide a tension (or tensile force) T to the flexible display 230 and/or the support sheet 470 being in the driving connection state with the pulley 460. The tensile structure may apply the tension T to the support sheet 470 attached to the flexible display 230.

According to an embodiment, when the tension T by the tensile structure is in the critical range, the bendable section ② may maintain in a smoothly connected form with the first section ① without excitement in the closed state of FIG. 5 or in the open state of FIG. 6. When the tension T by the tensile structure is in the critical range, the bendable section ② may move while maintaining in the smoothly connected form with the first section ^{®} without excitement in the closed state of FIG. 5 or in the open state of FIG. 6 during the switchover between the closed state of FIG. 5 and the open state of FIG. 6. When the tension T by the tensile structure is in the critical range, the slide operation may be smoothly performed during the switchover between the closed state of FIG. 5 and the open state of FIG. 6.

For example, the tension T by the tensile structure may be lower than the critical range. In this case, due to the elasticity of the flexible display 230 and/or the elasticity of the support sheet 470, the bendable section ② may be excited, or may not be smoothly connected to the first section ①.

As another example, the tension T by the tensile structure may be higher than the critical range. In this case, although the bendable section ② may be smoothly connected to the first section ① without excitement, it may be difficult to smoothly perform the slide operation during the switchover between the closed state of FIG. 5 and the open state of FIG. 6. If the tension being applied to the support sheet 470 c attached to the flexible display 230 is higher than the critical range, the load on the rotation shaft of the pulley 460 exceeds the critical value to heighten the resistance to the rotation of the pulley 460, and thus a smooth and soft slide operation may become difficult.

It may be difficult to assemble the tensile structure and related elements (e.g., motorized mechanical elements) in the electronic device 200 in a state where the tension T acting on the flexible display 230 and/or the support sheet 470 is kept in the critical range. Due to repetition of the slide operations, the tension T acting on the flexible display 230 and/or the support sheet 470 may be lower than the critical range.

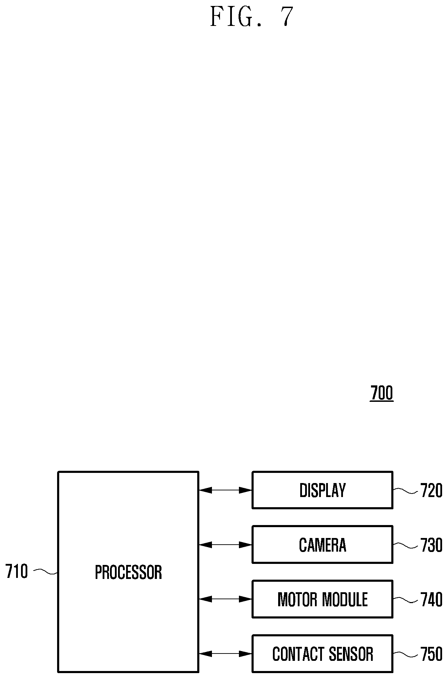

FIG. 7 is a block diagram of the electronic device of FIG. 2A according to an embodiment.

With reference to FIG. 7, an electronic device may include a display 720, a camera 730, a motor module 740, a contact sensor 750, and a processor 710, and some of the constitutions illustrated in various embodiments may be omitted or replaced. The electronic device may further include at least some of the constitutions and/or functions of the electronic device of FIG. 1. At least some of the illustrated (or non-illustrated) constitutions of the electronic device may be connected with one another operatively, functionally, and/or electrically. According to various embodiments, the contact sensor 750 (e.g., touch sensor) may be included in the display 720. For example, the function of the contact sensor 750 may be built in (in-cell) a liquid crystal panel (not illustrated) of the display 720, or the function of the contact sensor 750 may be built in (in-cell) between a color filter substrate (not illustrated) and a polarizer (not illustrated) of the display 720, or the function of the contact sensor 750 may be included (on-cell) at the top of the liquid crystal panel (not illustrated) of the display 720.

According to various embodiments, the display 720 may display various images under the control of the processor 710. The display 720 may be implemented by any one of a liquid crystal display (LCD), a light emitting diode (LED) display, and an organic light emitting diode (OLED) display, but is not limited thereto. The display 720 may be composed of a touch screen that senses a touch and/or proximity touch (or hovering) input using a user's body part (e.g., finger) or an input device (e.g., stylus pen). The display 720 may include at least some of the constitutions and/or functions of the display module of FIG. 1.

According to various embodiments, the display 720 may be flexible at least partly, and may be implemented by a foldable display or a rollable display.

According to various embodiments, the camera 730 may obtain external image data. The camera 730 may obtain the image data by using a charge coupled device (CCD) type or complementary metal oxide semiconductor (CMOS) type image sensor. In the electronic device, one or more cameras may be disposed on the front surface and/or the rear surface of the housing, and hereinafter, unless explained otherwise, the image data including an area of user's eyes may be one obtained by using the rear camera.

According to various embodiments, the camera 730 may capture an image of a subject by enlarging or reducing the subject through zoom-in and zoom-out. The camera may perform the zoom-in and/or zoom-out by using at least one method of an optical zoom for adjusting the focus position, viewing angle, and/or size of the subject of which the image is captured by moving an optical lens back and forth, and a digital zoom for adjusting the viewing angle of an image that is provided to the user and/or the size of the subject by cropping and expanding a preview image that is obtained by the charge coupled device (CCD) in a digital signal process. According to an embodiment, during the zoom-in, the camera 730 may additionally zoom in the subject by using the digital zoom in the zoom-in state with the maximum size (or minimum viewing angle) (e.g., 50x).

According to various embodiments, when performing the zoom-in and/or zoom-out, the camera 730 may give an optical zoom effect by switching a plurality of cameras having different viewing angles. For example, the cameras of the electronic device may include a first wide angle camera, a second wide angle camera taking a narrower wide angle than that of the first wide angle camera, and a third wide angle camera taking a narrower wide angle than that of the second wide angle camera. If the user increases the magnification while using the first wide angle camera, the optical zoom may be performed through switchover to the second wide angle camera. If the user further increase the magnification while using the second wide angle camera, the optical zoom may be performed through switchover to the third wide angle camera.

According to various embodiments, the motor module 740 may expand the rollable display of the electronic device. For example, the motor module 740 may draw out the display 720 of the bendable section ② drawn in based on the user's touch input. In contrast, the motor module 740 may draw the drawn-out display 720 into the housing again. The motor module 740 may receive expansion information calculated by the processor 710 based on the zoom magnification, and expand the display 720 based on the received expansion information (e.g., control signal for controlling opening and/or closing of the display). The expansion information may include the control signal for the motor module to control the opening or closing of the display.

According to various embodiments, the motor module 740 may expand the display 720 to match with the user's pinch zoom speed. For example, in case that the user enlarges the display 720 to the maximum magnification in two seconds, the processor 710 may receive information on the touch input from the contact sensor 750 in real time, and calculate the zoom magnification. The processor may transmit, to the motor module 740, the expansion information to expand the display with the maximum magnification in two seconds, which is calculated based on the calculated zoom magnification. The motor module may receive the expansion information, and expand the display 720 up to the maximum length in two seconds. According to another embodiment, the motor module 740 may expand the display 720 after determination of the zoom magnification is ended. That is, the processor may calculate the zoom magnification after the touch input is ended, and generate and transmit the expansion information to the motor module, the motor module may expand the display 720 as long as the length indicated by the expansion information.

According to various embodiments, the motor module may be configured to expand the display only up to the designated maximum expansion length. According to an embodiment, the zoom magnification in a state where the display is expanded up to the maximum expansion length may be smaller than the maximum zoom magnification. For example, it may be configured that the maximum zoom magnification (optical zoom magnification and digital zoom magnification) provided by the camera module is 50.0x, the maximum expansion length of the display is 10 cm, and the zoom magnification in case of expanding the display only up to the maximum expansion length is expanded up to 30.0x. If the digital zoom magnification and/or the optical zoom magnification of the camera are additionally increased by a user's pinch zoom-in gesture after the display is expanded up to the maximum expansion length, the display is not expanded any further, and the processor may enlarge the image in accordance with the zoom magnification.

According to various embodiments, the contact sensor 750 (e.g., touch sensor) may sense the user's touch input. The user may enlarge or contract a specific portion of the preview through the touch input. The user's touch input may include, for example, a pinch zoom gesture for the camera preview or a touch and a drag gesture for a zoom guide bar. The pinch zoom gesture may be a gesture in which two touch points are touched and dragged so that the distance between the two touch points is increased or reduced. According to an embodiment, the zoom guide bar is a bar in the form of a long bar, and may be located on one side of the display 720, and may include a figure indicating the current zoom magnification. If the zoom magnification with the maximum expansion length of the display is smaller than the maximum zoom magnification, the zoom guide bar may additionally include a graphic object that indicates the zoom magnification with the maximum expansion length of the display. The contact sensor 750 may sense the touch input as above, and transmit information about this to the processor 710.

According to various embodiments, the processor 710 may be the constitution being connected to the respective constituent elements (e.g., the display 720, camera 730, motor module 740, and/or contact sensor 750) operatively, functionally, and/or electrically, and capable of perform calculation or data processing related to the control and/or communication of the respective constituent elements. The processor 710 may include at least some of the constitutions and/or functions of the processor 120 of FIG. 1.

According to various embodiments, the calculation and the data processing that can be implemented by the processor 710 on the electronic device may not be limited, but hereinafter, various embodiments for expanding the rollable display of the electronic device based on the user' touch input will be described. The operations of the processor 710 to be described later may be performed by loading instructions stored in the memory.

According to various embodiments, the processor 710 may execute the camera 730. The camera 730 may capture an image of the subject in front, and convert the captured image into image data, and the processor 710 may display the corresponding image data in the form of a preview on the display 720. According to an embodiment, the processor 710 may perform the image capturing by using a single camera or multi-camera. In case of using the single camera, the processor may be configured (e.g., folded zoom) to use the optical zoom and the digital zoom in all. For example, the single camera may perform the optical zoom until the designated zoom magnification, and may capture an image of the subject by performing the digital zoom if the zoom magnification exceeds the designated zoom magnification.

According to various embodiments, if the processor performs the image capturing by the single camera, it may be configured that the display is expanded up to the maximum expansion length as the zoom magnification is increased while the optical zoom is performed. If the zoom magnification exceeds the designated zoom magnification to perform the optical zoom, the optical zoom is switched to the digital zoom, and the display may not be expanded any further. Thereafter, if the zoom magnification is additionally increased based on the user input, the processor may enlarge the image in accordance with the zoom magnification and display the enlarged image on the display.

In case of using the multi-camera, different cameras may be used in accordance with the zoom magnification. For example, if the maximum zoom magnification is 50.0x, the first camera may be used for image capturing in the range of 1.0x to 10.0x, the second camera may be used in the range of 10.0x to 30.0x, and the third camera may be used in the range of 30.0x to 50.0x. In this case, if the zoom magnification determined by the touch input is 35.0x, the first camera may be used for the image capturing up to 10.0x, the second camera may be used in the range of 10.0x to 30.0x, and the third camera may be used in the range of 30.0x to 35.0x. According to an embodiment, the user may change the screen expansion ratio in accordance with the number of cameras 730.

According to various embodiments, the processor 710 may receive information about the user's touch input from the contact sensor 750. According to an embodiment, the processor 710 may determine the zoom magnification by utilizing the information about the touch input. The zoom magnification may mean how much magnification the preview of the subject is enlarged. For example, in case that the maximum zoom magnification of the electronic device is 50.0x, the processor 710 may configure to increase the zoom magnification by 5.0x whenever the length between the two touch points is increased by 1 cm by the pinch zoom gesture. If the distance between the touch points is increased by 7 cm by the first touch input, the zoom magnification may be determined as 35.0x, and if the distance between the touch points is reduced by 2 cm by the second touch input, the zoom magnification may be determined as 25.0x.

According to another embodiment, the touch input may include an operation about the zoom guide bar. Specifically, the zoom guide bar may include at least one of a bar in the form of a long bar, graduation, a magnification figure, and an indicator line. If the zoom magnification with the maximum expansion length of the display is smaller than the maximum zoom magnification, the zoom guide bar may additionally include the graphic object indicating the zoom magnification with the maximum expansion length of the display. For example, if the zoom magnification with the maximum expansion length is 10.0x, the portion of the zoom guide bar corresponding to 10.0x may be displayed with a different color. The graduation may be displayed together with the bar, and may be displayed at a certain distance so that the user can be easily aware of the magnification of the corresponding location. The magnification figure may be displayed on one side of the bar, and figure information about the magnification corresponding to the location may be displayed. According to an embodiment, if the zoom guide bar is disposed long left and right, the magnification may be configured to be increased as going from left to right. However, the embodiment is not limited thereto, and the magnification may be increased as going from right to left, or if the bar is disposed long up and down, the magnification may be configured to be increased as going from bottom to top. The indicator line may be located inside the bar, and may represent information about the current magnification. The user may adjust the magnification through gestures of touching and dragging the indicator line. For example, if the user desires to change the current magnification of 10.0x to 25.0x, the user may touch the indicator line that is at the 10.0x location, and may drag the indicator line to the location corresponding to 25.0x with reference to the magnification figure. After determining the zoom magnification, the processor 710 may enlarge the image as much as the determined zoom magnification, generate the expansion information including a control signal for controlling opening or closing of the display, and transmit the generated expansion information to the motor module 740.

According to various embodiments, the processor 710 may execute an operation of reducing the display 720 based on the user's pinch zoom gesture or operation about the zoom guide bar. For example, in case of moving the pinch zoom-out gesture or the indicator line of the zoom guide bar to the left (or right), the zoom magnification may be reduced, and the display 720 may be reduced by transferring the expansion information calculated based on the reduced zoom magnification to the motor module 740. The contents to be described hereinafter include a case where the image and the display 720 are reduced through reception of the pinch zoom-out or the operation about the zoom guide bar.

According to various embodiments, the processor 710 may enlarge or contract the image as much as the determined zoom magnification. That is, the processor 710 may enlarge or contract the image received by the camera 730, and display the image on the display 720. In this case, the image may be enlarged around the center point of the line connecting the two touch points or the center of the display screen. For example, if the user performs the pinch zoom, the image can be enlarged around the center point of the line connecting the two touch points. If the user operates the zoom guide bar, one touch point is provided, and the image can be enlarged based on the center of the display screen. The user can view a laterally (or vertically) wider screen through the enlarged display 720.

According to various embodiments, the processor 710 may transmit the expansion information calculated based on the zoom magnification to the motor module 740. The expansion information may include information about the length of the display 720 that should be expanded. The length of the display 720 to be expanded may be proportionally determined with respect to the maximum expansion length. For example, if the zoom magnification calculated by the first touch input is 35.0x in case that the maximum expansion length of the display 720 is 10 cm, and the maximum zoom magnification is 50.0x, the display 720 may be expanded by 7 cm. Thereafter, if the zoom magnification calculated by the second touch input is 25.0x, the display 720 may be reduced by 2 cm. The motor module may expand the display based on the received expansion information.

According to various embodiments, at least a part of the bendable section that is drawn out through expansion of the display 720 may be an expanded area of the display screen. In the expanded area, the image expanded based on the user's touch input may be displayed.

According to various embodiments, the processor 710 may display an animation together when displaying an image in the expanded area. According to an embodiment, the processor 710 may operate in a manner that it opens only a black screen in the expanded area during the expansion of the display 720 by the motor module 740, and after the expansion is ended, it opens the enlarged image in the whole area of the display 720 including the expanded area at once. For example, if the magnification is increased from 10.0x to 20.0x by the user's touch input, the expanded area may arise as the motor module 740 draws out the bendable section. During the draw-out, only the black screen is displayed in the expanded area, and no image may arise. Further, after the expansion is completed, the image is expanded as much as the increased magnification, and the expanded image is displayed on the display 720.

According to another embodiment, the processor 710 may first complete and draw out the screen in the expanded area to be drawn out. For example, in case of drawing out the bendable section based on the user's touch input, the processor may enlarge the screen based on the predetermined zoom magnification, and may also enlarge the image together as the bendable section is drawn out. That is, expansion of the display 720 and the enlargement of the image may occur at the same time.

According to various embodiments, the processor 710 may adjust the center location of the existing display screen having been viewed by the user as the bendable section is drawn out. For example, if the display 720 is expanded to the right, the processor 710 may move the display screen to the right, and dispose the display screen so that the center of the display 720 and the center of the screen coincide with each other. According to an embodiment, in this case, the expanded area may be generated on both side surfaces of the existing display screen.

According to various embodiments, the processor 710 may expand the display 720 only in one direction, and may expand the display 720 in both side directions. For example, if the motor module 740 is present on both side surfaces of the display 720, the display 720 may be expanded to the right and the left at the same time.

According to various embodiments, if the user expands the display 720 by applying a physical force to the display 720, the same effect as the pinch zoom-in may occur. For example, if the display 720 is expanded by giving strength thereto, the processor 710 may calculate the zoom magnification based on the expanded length, enlarge the image based on the calculated zoom magnification, and move the indicator line of the zoom guide bar. Even in case of reducing the display 720, the opposite effect occurs in the same manner, and thus more detailed explanation will not be made. All contents described hereinafter include the contents in which the image is enlarged by physically enlarging the display 720.

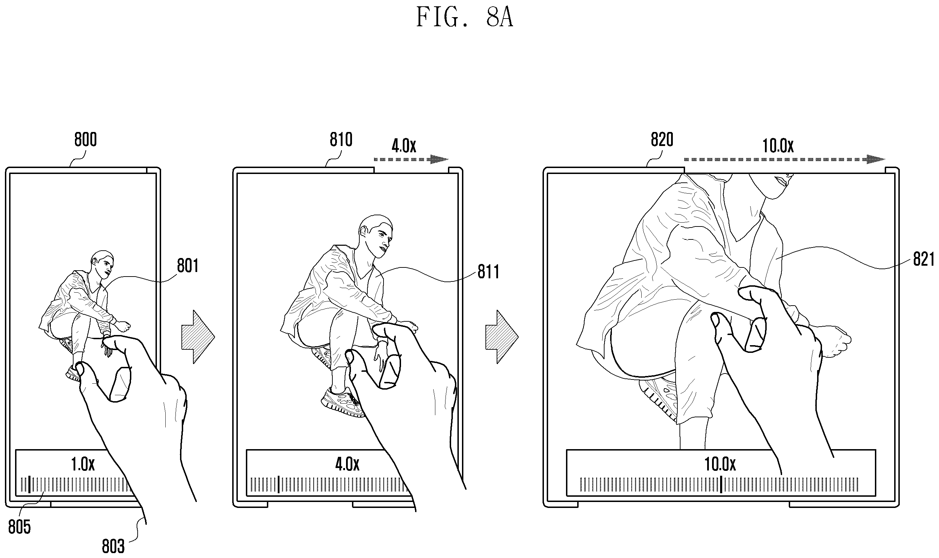

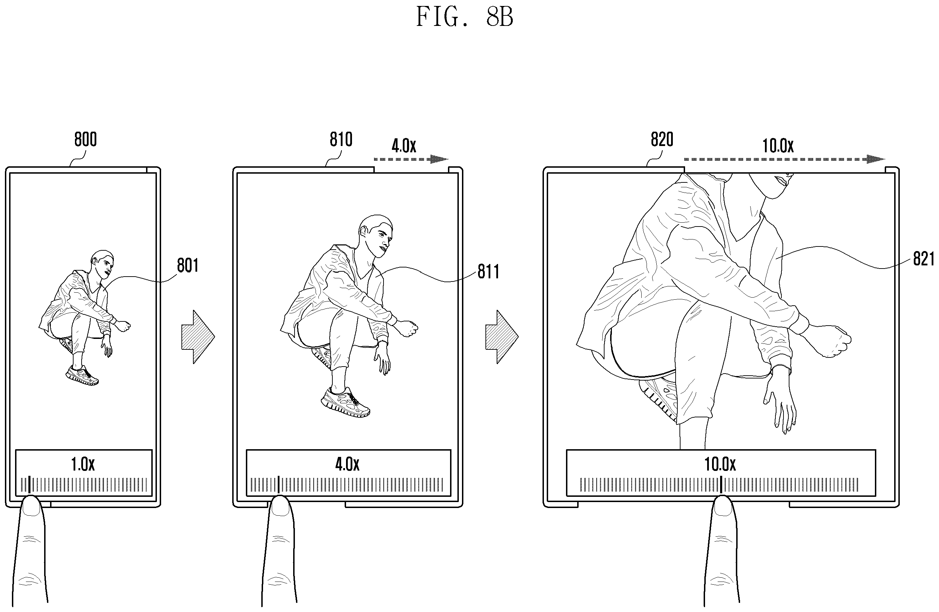

FIGS. 8A and 8B illustrate an electronic device on which a display is expanded by a touch input according to various embodiments.

With reference to FIG. 8A, the display may be expanded based on the user's pinch zoom gesture. The pinch zoom gesture may means a gesture in which two touch points are touched and dragged so as to narrow or widen the distance between the two touch points. FIGS. 8A and 8B illustrate embodiments in which the display is expanded in a lateral direction, but the expansion direction is not limited thereto, and the display may be expanded in various directions.

According to various embodiments, if the user performs the pinch zoom-in, the image is expanded. If the user's touch input is sensed by the contact sensor, the processor may calculate the zoom magnification by analyzing information received from the contact sensor. The processor may calculate the expansion information based on the calculated zoom magnification and transmit the calculated expansion information to the motor module, and the motor module may expand the display based on the received expansion information. According to an embodiment, the processor may provide a wider screen by enlarging the image and expanding the display at the same time. According to another embodiment, the indication line of the zoom guide bar 805 located on one side of the display screen may move together as the zoom magnification is different.

For example, if the distance between the two touch points becomes widened by 1 cm, the zoom magnification may be calculated to be increased by 5.0x. The first magnification display 800 has the zoom magnification of 1.0x in a state where the expansion does not occur, and in this case, if the user performs 4 cm pinch zoom-in, the zoom magnification is increased to 20.0x. As a result, the first magnification subject 801 is enlarged to the second magnification subject 811, the first magnification display 800 is expanded to the second magnification display 810, and the indicator line of the zoom guide bar 805 moves to the right and indicates 20.0x. Again, if the user performs 6 cm pinch zoom-in, the zoom magnification is increased to 50.0x, and the second magnification subject 811 and the second magnification display 810 are expanded to the third magnification subject 821 and the third magnification display 820, respectively. In case that the 50.0x is the maximum zoom magnification, the indicator line of the zoom guide bar 805 moves all the way to the right.

With reference to FIG. 8B, the processor may determine the zoom magnification through reception of an operation 807 for the zoom guide bar 805, enlarge the image, and expand the display. Since the operation 807 of the zoom guide bar 805 is that the user directly determines the zoom magnification, the processor may not separately calculate the zoom magnification. The following contents are as described above with reference to FIG. 8A.

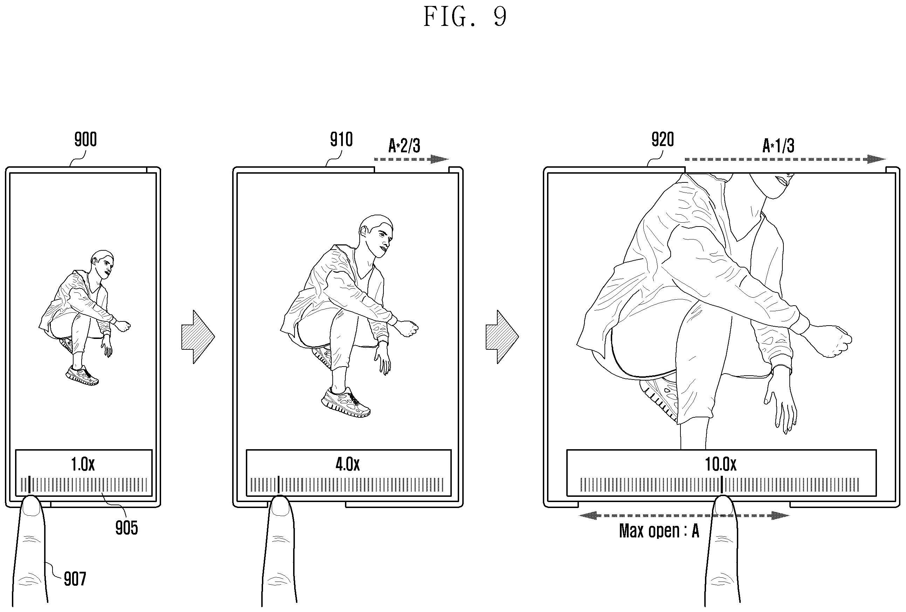

FIG. 9 illustrates an electronic device on which a display is expanded in case of using a multi-camera according to an embodiment.

With reference to FIG. 9, the processor may capture images of the subject by using a plurality of cameras that capture the images of the subject with different zoom magnifications. The respective cameras may have different viewing angles. For example, in case that the maximum magnification of the electronic device is 50.0x, the first camera having the widest viewing angle may be in charge of the magnification of 1.0x to 10.0x, the second camera may be in charge of the magnification of 10.0x to 30.0x, and the third camera having the narrowest viewing angle may be in charge of the magnification of30.0x to 50.0x. In order to capture the image of the subject with the 40.0x zoom magnification, the user operates the first camera up to 1.0x to 10.0x, operates the second camera up to 10.0x to 30.0x, and operates the third camera up to 40.0x. According to an embodiment, a flicker may appear on the display screen at the time when the camera is switched.

According to various embodiments, if the zoom magnification is increased based on the user's touch input, the display is also expanded to match with the corresponding zoom magnification. For example, only 1/5 of the maximum expansion length may be expanded while the user performs capturing with the first camera (900), only 3/5 of the maximum expansion length may be expanded while capturing with the second camera (910), and the maximum expansion length may be expanded while capturing with the third camera (920). Other embodiments are the same as those described above, and thus will be omitted.

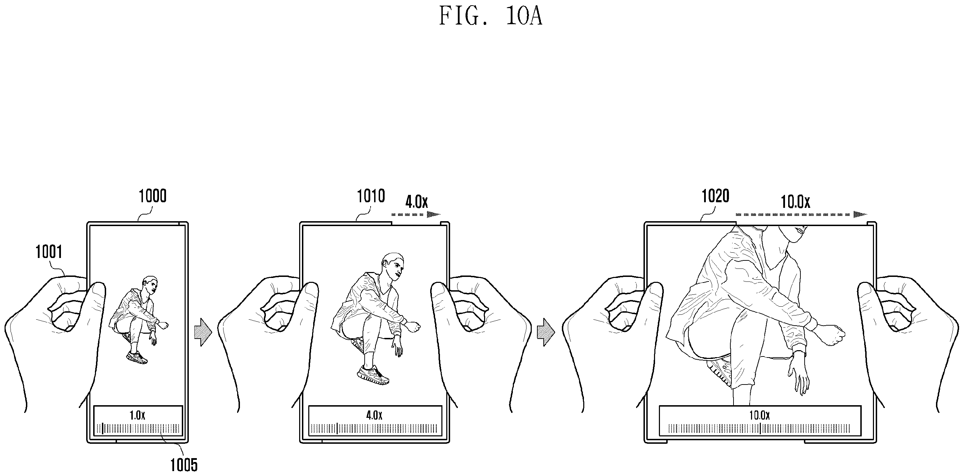

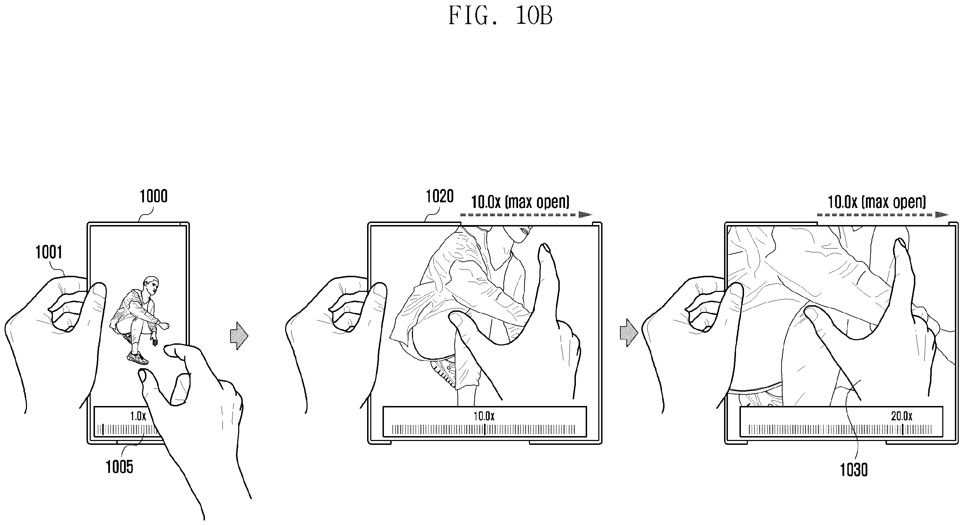

FIGS. 10A and 10B illustrate an electronic device that expands an image when a display is expanded according to an embodiment.

With reference to FIG. 10A, the user may enlarge the image by expanding the display through applying of a physical force to the display. According to various embodiments, the processor may enlarge or reduce the image by calculating the zoom magnification based on the expanded length of the display. For example, in case that the first magnification subject is displayed on the first magnification display 1000, the user may enlarge the image by pulling the display on both sides. If the maximum zoom magnification is 30.0x, and the maximum expansion length of the display is 10 cm, the user may expand (e.g., by 4 cm) the first magnification display 1000 to the second magnification display 1010, and in this case, the processor may calculate the zoom magnification, and enlarge the first magnification subject (e.g., 1.0x) to the second magnification subject (e.g., 12.0x). If the user further expands (e.g., by 10 cm) to the third magnification display 1020, the image may also be enlarged to the third magnification subject (e.g., 30.0x).

According to various embodiments, the zoom magnification with the maximum expansion length of the display may be configured to be smaller than the maximum zoom magnification. With reference to FIG. 10B, in the third magnification display 1020 in which the display is in a maximally expanded state, the zoom magnification may be 10.0x that is smaller than the maximum zoom magnification. Thereafter, even if the user performs the pinch zoom-in gesture (1030), the display may not be expanded any further. The user may additionally enlarge the image that is displayed on the screen through the pinch zoom-in gesture 1030 or the operation of the zoom guide bar.

According to various embodiments, in case that the display is expanded from the first magnification display 1000 to the second magnification display 1010 or the display is expanded from the second magnification display 1010 to the third magnification display 1020 by increasing the magnification, any image may not be displayed in the expanded area while the display is expanded. The processor may display the enlarged image on the entire display including the expanded area after the expansion of the display is ended. According to another embodiment, the processor may calculate the zoom magnification in real time simultaneously with the expansion of the display. The processor may enlarge the image in real time based on the calculated zoom magnification, and display the enlarged image in the expanded area.

According to an embodiment, the display screen may include at least one zoom guide bar 1005. The zoom guide bar 1005 may include at least one of a bar in the form of a bar, graduation, an indicator line, and a magnification figure. If the zoom magnification with the maximum expansion length of the display is smaller than the maximum zoom magnification, the zoom guide bar may additionally include the graphic object indicating the zoom magnification with the maximum expansion length of the display. The indicator line is a constitution displaying the current zoom magnification, and if the user changes the zoom magnification by enlarging the display, the indicator line may move accordingly. For example, in case of capturing an image of the subject with the first magnification, the indicator line is located at the left end of the zoom guide bar 1005, but as the image capturing is performed with the second magnification and the third magnification, the indicator line may gradually move to the right end of the zoom guide bar 1005.

According to various embodiments, although not illustrated in the drawing, if the display is physically reduced, the processor may operate in reverse to the above-described contents. That is, the image may be reduced, and the indicator line of the zoom guide bar 1005 may move to the left.

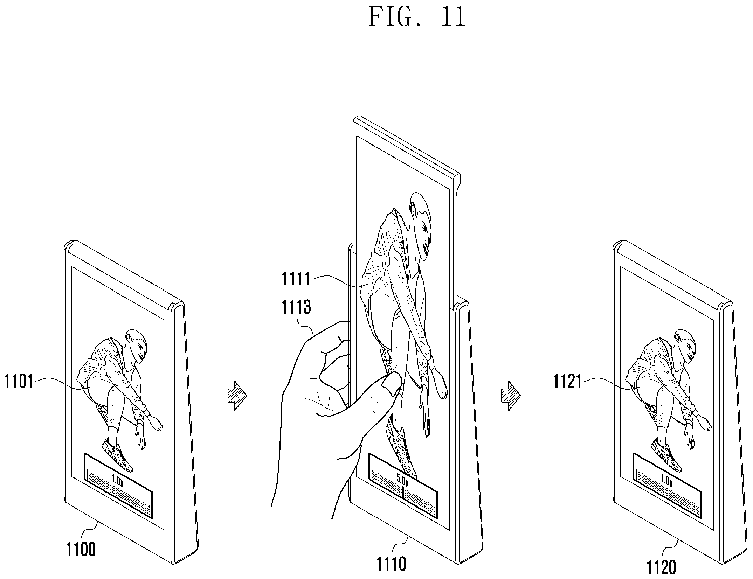

FIG. 11 illustrates an electronic device on which a display is expanded up and down according to an embodiment.

According to various embodiments, the processor may expand the display right and left as illustrated in FIGS. 2 to 10, and may expand the display up and down. With reference to FIG. 11, in case that the user performs the pinch zoom-out gesture or operates the zoom guide bar, the processor may expand the display up and down while enlarging the image based on the touch input.

For example, the processor may receive the image of the subject from the camera, and display the first magnification subject 1101 on the first magnification display 1100. The first magnification subject 1101 displayed on the first magnification display 1100 may be enlarged to the second magnification subject 1111 by the user's touch input 1113 including at least one of the pinch zoom-in gesture and the zoom guide bar operation. With the image enlargement, the first magnification display 1100 may also be expanded to the second magnification display 1110 by the motor module. In case of reducing the image to the third magnification subject 1121 through the pinch zoom-out gesture or the zoom guide bar operation, the second magnification display 1110 is reduced to the third magnification display 1120 by the motor module. Other operations of the processor and the motor module are the same as described above, and will be omitted.

According to various embodiments, in case of physically pushing up the display, the image may be enlarged as if the pinch zoom-in gesture is performed. In contrast, in case of pulling down the display, the image may be reduced as if the pinch zoom-out gesture is performed.

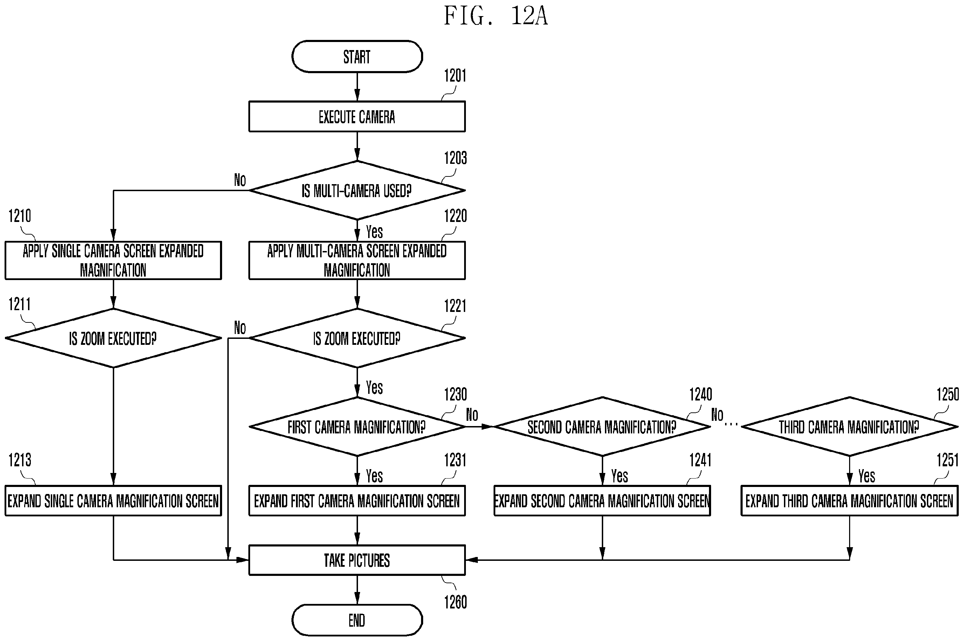

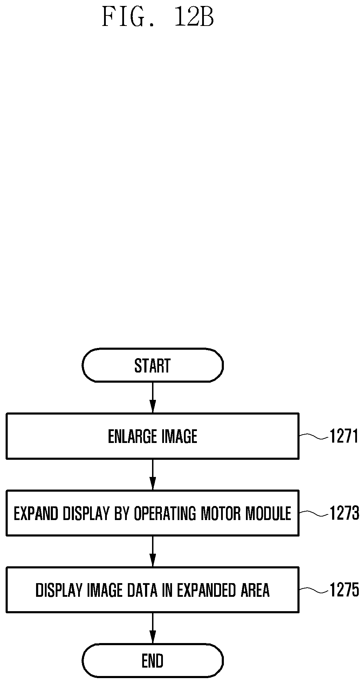

FIGS. 12A and 12B illustrate a method for expanding a rollable display of an electronic device.

The illustrated method may be performed by the electronic device (e.g., electronic device 700 of FIG. 7) described above through FIGS. 1 to 11, and explanation of the technical features as described above will be omitted.

According to various embodiments, in step 1201, the electronic device may execute the camera. The camera may capture an image of the subject in front and convert the captured image into image data, and the electronic device may display the corresponding image data in the form of a preview on the display. According to an embodiment, the electronic device the processor 710 may perform the image capturing with a single camera in step 1210, or may perform the image capturing with a multi-camera in step 1220. In case of using the multi-camera, different cameras may be used in accordance with the zoom magnification.

According to various embodiments, if the electronic device uses the single camera, the optical zoom and/or the digital zoom may be used in accordance with the zoom magnification. For example, the optical zoom may be used until the zoom magnification becomes 5.0x, and the digital zoom may be used if the zoom magnification exceeds 5.0x. The display may be configured to be expanded in interwork with the zoom magnification up to 5.0x in which the optical zoom arises. While the digital zoom arises, the electronic device may not expand the display, but may enlarge only the image being displayed on the screen.

According to various embodiments, in steps 1230, 1240, and 1250, the electronic device may change the cameras to be used for the image capturing in accordance with the zoom magnification. For example, if the maximum zoom magnification is 50.0x, the first camera may be used for the image capturing in the range of 1,0x to 10.0x, the second camera may be used in the range of 10.0x to 30.0x, and the third camera may be used in the range of 30.0x to 50.0x. In this case, if the zoom magnification determined by the touch input is 35.0x, the first camera may be used for the image capturing up to 10.0x in step 1231, the second camera may be used in the range of 10.0x to 30.0x, and the third camera may be used in the range of 30.0x to 35.0x. According to an embodiment, the user may change the screen expansion ratio in accordance with the number of cameras.

According to various embodiments, the electronic device may receive information about the user's touch input from the contact sensor. According to an embodiment, the electronic device may determine the zoom magnification by utilizing the information about the touch input. The zoom magnification may mean how much magnification the preview of the subject is enlarged. For example, in case that the maximum zoom magnification of the electronic device is 50.0x, the electronic device may configure to increase the zoom magnification by 5.0x whenever the distance between the two touch points is increased by 1 cm by the pinch zoom gesture. If the distance between the touch points is increased by 7 cm by the first touch input, the zoom magnification may be determined as 35.0x, and if the distance between the touch points is reduced by 2 cm by the second touch input, the zoom magnification may be determined as 25.0x.

According to another embodiment, the touch input may include an operation about the zoom guide bar. Specifically, the zoom guide bar may include at least one of a bar in the form of a long bar, graduation, a magnification figure, and an indicator line. If the zoom magnification with the maximum expansion length of the display is smaller than the maximum zoom magnification, the zoom guide bar may additionally include the graphic object indicating the zoom magnification with the maximum expansion length of the display. The graduation may be displayed together with the bar, and may be displayed at a certain distance so that the user can be easily aware of the magnification of the corresponding location. The magnification figure may be displayed on one side of the bar, and figure information about the magnification corresponding to the location may be displayed. According to an embodiment, if the zoom guide bar is disposed long left and right, the magnification may be configured to be increased as going from left to right. However, the embodiment is not limited thereto, and the magnification may be increased as going from right to left, or if the bar is disposed long up and down, the magnification may be configured to be increased as going from bottom to top. The indicator line may be located inside the bar, and may represent the information about the current magnification. The user may adjust the magnification through gestures of touching and dragging the indicator line. For example, if the user desires to change the current magnification of 10.0x to 25.0x, the user may touch the indicator line that is at the 10.0x location, and may drag the indicator line to the location corresponding to 25.0x with reference to the magnification figure. After determining the zoom magnification, the electronic device may enlarge the image as much as the determined zoom magnification, calculate the expansion information about the length to which the display should be expanded based on the zoom magnification, and transmit the calculated expansion information to the motor module.

According to various embodiments, the electronic device may also execute an operation of reducing the display based on the user's pinch zoom gesture or an operation about the zoom guide bar. For example, in case of moving the pinch zoom-out gesture or the indicator line of the zoom guide bar to the left (or right), the reduced zoom magnification may be calculated, and the display may be reduced by transferring the expansion information calculated based on the zoom magnification to the motor module. The contents to be described hereinafter include a case where the image and the display are reduced through reception of the pinch zoom-out or the operation for the zoom guide bar.

FIG. 12B is a flowchart illustrating a method for enlarging an image and expanding a display based on the calculated zoom magnification. According to various embodiments, in step 1271, the electronic device may enlarge or contract the image as much as the determined zoom magnification. That is, the electronic device may enlarge or contract the image received by the camera, and display the image on the display. In this case, the image may be enlarged around the center point of the line connecting the two touch points or the center of the display screen. For example, if the user performs the pinch zoom-in, the image can be enlarged around the center point of the line connecting the two touch points. If the user operates the zoom guide bar, one touch point is provided, and the image can be enlarged based on the center of the display screen. The user can view a laterally (or vertically) wider screen through the enlarged display.

According to various embodiments, in step 1273, the electronic device may transmit the expansion information calculated based on the zoom magnification to the motor module. The expansion information may include information about the length of the display that should be expanded. The length of the display to be expanded may be proportionally determined with respect to the maximum expansion length. For example, if the zoom magnification calculated by the first touch input is 35.0x in case that the maximum expansion length of the display is 10 cm, and the maximum zoom magnification is 50.0x, the display may be expanded by 7 cm, and the expansion information may include a command to expand the display by 7 cm. The motor module may expand the display by 7 cm through reception of the expansion information. Thereafter, if the zoom magnification calculated by the second touch input is 25.0x, the display may be reduced by 2 cm, and the expansion information may include a command to reduce the display by 2 cm. The motor module may reduce the display by 2 cm based on the received expansion information.

According to various embodiments, at least a part of the bendable section that is drawn out through expansion of the display may be an expanded area of the display screen. In step 1275, the electronic device may display the enlarged image in the expanded area based on the user's touch input.

According to various embodiments, the electronic device may display an animation together when displaying the image in the expanded area. According to an embodiment, the electronic device may operate in a manner that it opens only a black screen in the expanded area during the expansion of the display by the motor module, and after the expansion is ended, it opens the enlarged image in the whole area of the display including the expanded area at once. For example, if the magnification is increased from 10.0x to 20.0x by the user's touch input, the expanded area may arise as the motor module draws out the bendable section. During the draw-out, only the black screen is displayed in the expanded area, and no image may arise. Further, after the expansion is completed, the image is expanded as much as the increased magnification, and the expanded image is displayed on the display.

According to another embodiment, the electronic device may first complete and draw out the screen in the expanded area to be drawn out. For example, in case of drawing out the bendable section based on the user's touch input, the electronic device may enlarge the screen based on the predetermined zoom magnification, and may also enlarge the image together as the bendable section is drawn out. That is, expansion of the display and the enlargement of the image may occur at the same time.

According to various embodiments, the electronic device may adjust the center location of the existing display screen having been viewed by the user as the bendable section is drawn out. For example, if the display is expanded to the right, the electronic device may move the display screen to the right, and dispose the display screen so that the center of the display and the center of the screen coincide with each other. According to an embodiment, in this case, the expanded area may be generated on both side surfaces of the existing display screen.

According to various embodiments, the electronic device may expand the display only in one direction, and may expand the display in both side directions. For example, if the motor module is present on both side surfaces of the display, the display may be expanded to the right and the left at the same time.

According to various embodiments, if the user expands the display by applying a physical force to the display, the same effect as the pinch zoom-in may occur. For example, if the display is expanded by giving strength thereto, the electronic device may calculate the zoom magnification based on the expanded length, enlarge the image based on the calculated zoom magnification, and move the indicator line of the zoom guide bar. Even in case of reducing the display, the opposite effect occurs in the same manner, and thus more detailed explanation will not be made. All contents described hereinafter include the contents in which the image is enlarged by physically enlarging the display.

According to various embodiments, the display may be expanded based on the user's pinch zoom gesture. The pinch zoom gesture may mean a gesture in which two touch points are touched and dragged so that the distance between the two touch points is increased or reduced.

According to various embodiments, if the user performs the pinch zoom-in, the image is enlarged. If the user's touch input is sensed by the contact sensor, the electronic device may calculate the zoom magnification by analyzing information received from the contact sensor. The electronic device may calculate the expansion length of the display based on the calculated zoom magnification. The electronic device may transmit the expansion information including the calculated expansion length to the motor module, and the motor module may expand the display based on the received expansion information. According to an embodiment, the electronic device may provide a wider screen by enlarging the image and expanding the display at the same time. According to another embodiment, the indication line of the zoom guide bar located on one side of the display screen may move together as the zoom magnification is different.

For example, if the distance between the two touch points becomes widened by 1 cm, the zoom magnification may be calculated to be increased by 2.0x. The first magnification display has the zoom magnification of 1.0x in a state where the expansion does not occur, and in this case, if the user performs 4 cm pinch zoom-in, the zoom magnification is increased to 9.0x. As a result, the first magnification subject is enlarged to the second magnification subject, the first magnification display is expanded to the second magnification display, and the indicator line of the zoom guide bar moves to the right and indicates 9.0x. Again, if the user performs 6 cm pinch zoom-in, the zoom magnification is increased to 21.0x, and the second magnification subject and the second magnification display are expanded to the third magnification subject and the third magnification display, respectively. In case that the 21.0x is the maximum zoom magnification, the indicator line of the zoom guide bar moves all the way to the right.

According to various embodiments, the electronic device may determine the zoom magnification through reception of an operation for the zoom guide bar, enlarge the image, and expand the display. Since the operation of the zoom guide bar is that the user directly determines the zoom magnification, the electronic device may not separately calculate the zoom magnification.

According to various embodiments, the electronic device may capture images of the subject by using a plurality of cameras that capture the images of the subject with different zoom magnifications. The respective cameras may have different viewing angles. For example, in case that the maximum magnification of the electronic device is 50.0x, the first camera having the widest viewing angle may be in charge of the magnification of 1.0x to 10.0x, the second camera may be in charge of the magnification of 10.0x to 30.0x, and the third camera having the narrowest viewing angle may be in charge of the magnification of 30.0x to 50.0x. According to an embodiment, a flicker may appear on the display screen at the time when the camera is switched.

According to various embodiments, if the zoom magnification is increased based on the user's touch input, the display is also expanded to match with the corresponding zoom magnification. For example, only 1/5 of the maximum expansion length may be expanded while the user performs capturing with the first camera, only 3/5 of the maximum expansion length may be expanded while capturing with the second camera, and the maximum expansion length may be expanded while capturing with the third camera. Other embodiments are the same as those described above, and thus will be omitted.

According to various embodiments, the user may enlarge the image by expanding the display through applying of a physical force to the display. According to an embodiment, the electronic device may enlarge or reduce the image by calculating the zoom magnification based on the expanded length of the display. For example, in case that the first magnification subject is displayed on the first magnification display, the user may enlarge the image by pulling the display on both sides. If the maximum zoom magnification is 50.0x, and the maximum expansion length of the display is 10 cm, the user may expand (e.g., by 4 cm) the first magnification display to the second magnification display, and in this case, the electronic device may calculate the zoom magnification, and enlarge the first magnification subject (e.g., 1.0x) to the second magnification subject (e.g., 20.0x). If the user further expands (e.g., by 10 cm) to the third magnification display, the image may also be enlarged to the third magnification subject (e.g., 50.0x).

According to an embodiment, the display screen may include at least one zoom guide bar. The zoom guide bar may include at least one of a bar in the form of a bar, graduation, an indicator line, and a magnification figure. The indicator line is a constitution displaying the current zoom magnification, and if the user changes the zoom magnification by enlarging the display, the indicator line may move accordingly. For example, in case of capturing an image of the subject with the first magnification, the indicator line is located at the left end of the zoom guide bar, but as the image capturing is performed with the second magnification and the third magnification, the indicator line may gradually move to the right end of the zoom guide bar.

According to various embodiments, although not illustrated in the drawing, if the display is physically reduced, the electronic device may operate in reverse to the above-described contents. That is, the image may be reduced, and the indicator line of the zoom guide bar may move to the left.

According to various embodiments, the electronic device may expand the display right and left, and may expand the display up and down. In case that the user performs the pinch zoom-out gesture or operates the zoom guide bar, the electronic device may expand the display up and down while enlarging the image based on the touch input.

For example, the electronic device may receive the image of the subject from the camera, and display the first magnification subject on the first magnification display. The first magnification subject displayed on the first magnification display may be enlarged to the second magnification subject by the user's touch input including at least one of the pinch zoom-in gesture and the zoom guide bar operation. With the image enlargement, the first magnification display may also be expanded to the second magnification display by the motor module. In case of reducing the image to the third magnification subject through the pinch zoom-out gesture or the zoom guide bar operation, the second magnification display is reduced to the third magnification display by the motor module

According to various embodiments, in case of physically pushing up the display, the image may be enlarged as if the pinch zoom-in gesture is performed. In contrast, in case of pulling down the display, the image may be reduced as if the pinch zoom-out gesture is performed.

## Claims

1. An electronic device comprising:
a flexible display;
a camera;
a motor module configured to expand and contract the display based on received information;
a contact sensor configured to receive a touch input; and
a processor operatively connected to the display, the motor module, the camera, and the contact sensor,
wherein the processor is configured to:
execute the camera,
display, on a screen of the display, image data received by the camera,
determine a zoom magnification by receiving information about the touch input sensed by the contact sensor,
generate expansion information including a length with which the display is to be expanded based on the zoom magnification,
transmit the generated expansion information to the motor module,
expand or contract the image data in accordance with the zoom magnification, and
additionally display the expanded image data in an expanded area in case that the display screen is expanded.

2. The electronic device of claim 1, wherein the motor module is configured to expand or contract the display in a first direction in proportion to the determined zoom magnification.

3. The electronic device of claim 2, wherein the processor is configured to additionally display the image data in the expanded area simultaneously with the expansion of the display in case that the display is expanded.

4. The electronic device of claim 2, wherein the processor is configured not to display the image data in the expanded area while the display is expanded, but to display the expanded image data after the expansion of the display is completed on the entire screen of the display including the expanded area.

5. The electronic device of claim 2, wherein the processor is configured to move the screen of the display in the first direction simultaneously with the expansion or contraction of the display.

6. The electronic device of claim 5, wherein the display is configured to generate the expanded area on both sides of the moved screen of the display.

7. The electronic device of claim 1, wherein the touch input received by the contact sensor comprises at least one of a pinch zoom and a touch input for a zoom guide bar, and the zoom guide bar is configured to change the zoom magnification based on a user's touch and a drag input.

8. The electronic device of claim 1, wherein the processor is configured to:
set a range of the zoom magnification in which a plurality of cameras are to be used, and
use the different camera in accordance with the zoom magnification of the display.

9. The electronic device of claim 2, wherein the motor module is configured to expand or contract the display in the first direction and in a second direction opposite to the first direction.

10. A method for expanding a flexible display of an electronic device, the method comprising:
executing a camera;
displaying, on a screen of the display, image data received by the camera;
determining a zoom magnification by receiving information about a touch input sensed by a contact sensor;
transmitting the zoom magnification to a motor module;
expanding or contracting the image data in accordance with the zoom magnification; and
additionally displaying the expanded image data in an expanded area in case that the display screen is expanded.

11. The method of claim 10, wherein expanding the screen of the display further comprises expanding or contracting, by a motor module, the display in a first direction in proportion to the determined zoom magnification.

12. The method of claim 11, wherein expanding the display further comprises additionally displaying the image data in the expanded area simultaneously with the expansion of the display.

13. The method of claim 11, wherein expanding the screen of the display further comprises not displaying the image data in the expanded area while the display is expanded, but displaying the expanded image data after the expansion of the display is completed on the entire screen of the display including the expanded area.

14. The method of claim 11, wherein expanding the display screen further comprises moving the screen of the display in the first direction simultaneously with the expansion or contraction of the display.

15. The method of claim 14, further comprising generating the expanded area on both sides of the moved screen of the display.
